(19) **Europäisches Patentamt / European Patent Office / Office européen des brevets**

(11) **EP 4 590 051 A1**

(12) **EUROPEAN PATENT APPLICATION**
published in accordance with Art. 153(4) EPC

(43) Date of publication:
**23.07.2025 Bulletin 2025/30**

(21) Application number: **23870526.3**

(22) Date of filing: **20.09.2023**

(51) International Patent Classification (IPC):
*H04W 72/1273* *(2023.01)*

(52) Cooperative Patent Classification (CPC):
**H04W 72/12; H04W 72/1273;** Y02D 30/70

(86) International application number:
**PCT/CN2023/120050**

(87) International publication number:
**WO 2024/067294 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 CN 202211231949
02.11.2022 CN 202211362876**

(71) Applicant: **Huawei Technologies Co., Ltd.
Shenzhen, Guangdong 518129 (CN)**

(72) Inventors:
• **HUA, Meng**
  **Shenzhen, Guangdong 518129 (CN)**
• **GAO, Fei**
  **Shenzhen, Guangdong 518129 (CN)**
• **DING, Mengying**
  **Shenzhen, Guangdong 518129 (CN)**
• **WANG, Yi**
  **Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **METHOD AND APPARATUS FOR TRANSMITTING DOWNLINK CONTROL INFORMATION**

(57)    This application provides a downlink control information DCI transmission method and an apparatus. The method includes: A terminal monitors a first DCI format based on an indication, where the first DCI format can be used to schedule data transmission of two or more cells; when a first cell is in an inactive mode or a dormancy mode, determines a quantity of information bits of the first DCI format based on a first bandwidth part BWP of the first cell; and monitors the first DCI format based on the quantity of information bits of the first DCI format. The technical solutions of this application help accurately determine a DCI format, and improve information transmission performance.

400

| Network device | | Terminal device |
|---|---|---|

S410: Receive first cross carrier scheduling information, where the first cross carrier scheduling information indicates the terminal device to monitor a first downlink control information DCI format

S420: When a first cell is in an inactive mode or a dormancy mode, determine a quantity of information bits of the first DCI format based on a first BWP of the first cell

S430: Monitor the first DCI format based on the quantity of information bits of the first DCI format

FIG. 4

## Description

This application claims priorities to Chinese Patent Application No. 202211231949.3, filed with the China National Intellectual Property Administration on September 30, 2022 and entitled "DOWNLINK CONTROL INFORMATION TRANSMISSION METHOD AND APPARATUS", and to Chinese Patent Application No. 202211362876.1, filed with the China National Intellectual Property Administration on November 2, 2022 and entitled "DOWNLINK CONTROL INFORMATION TRANSMISSION METHOD AND APPARATUS", both of which are incorporated herein by reference in their entireties.

## TECHNICAL FIELD

This application relates to the wireless communication field, and more specifically, to a downlink control information transmission method and an apparatus.

## BACKGROUND

With development of communication technologies, cross carrier scheduling (cross carrier scheduling, CCS) is introduced in a new radio (new radio, NR) communication system, that is, a downlink carrier of one cell carries a control channel, to schedule uplink and downlink data channels of another cell. A cell carrying a control channel is referred to as a scheduling cell, and a cell carrying uplink and downlink data channels is referred to as a scheduled cell. In the CCS, one scheduling cell may correspond to a plurality of scheduled cells, that is, one scheduling cell may send a control channel to perform data scheduling of a plurality of scheduled cells. Therefore, scheduling data transmission of a plurality of scheduled cells by using one piece of downlink control information (downlink control information, DCI) becomes a research focus.

When one piece of DCI is used to schedule data transmission of a plurality of scheduled cells, some fields in the DCI may be shared by the plurality of cells, and some fields, namely, specific indicator fields, need to be independently set for the cells. A specific indicator field is associated with a configuration of an active bandwidth part (bandwidth part, BWP) of a scheduled cell. Therefore, the specific indicator field of the scheduled cell may be determined based on the configuration of the BWP of the scheduled cell. However, to simultaneously schedule the data transmission of the plurality of cells, the scheduled cells are combined in the DCI, and are indicated in a carrier indicator field (carrier indicator field, CIF). Correspondingly, a BWP or a BWP identifier (identification, ID) of each scheduled cell is further set in a bandwidth part (bandwidth part, BWP) indicator field. Usually, to reduce overheads of the carrier indicator field (carrier indicator field, CIF), the CIF may not indicate all cell combinations. In addition, when a scheduled cell in an inactive mode or a dormancy mode is present in the plurality of scheduled cells, a BWP or a BWP ID is not configured for the cell according to an existing protocol. As a result, a specific indicator field of the scheduled cell cannot be accurately determined, and then scheduling of the scheduled cell cannot be accurately completed. Therefore, when the scheduled cell in the inactive mode or the dormancy mode is present in the plurality of scheduled cells, how to set BWP IDs and specific indicator fields of these cells becomes an urgent problem to be resolved.

Therefore, a method is urgently needed to accurately determine a DCI format and improve information transmission performance when one piece of DCI is used to schedule the data transmission of the plurality of scheduled cells.

## SUMMARY

This application provides a downlink control information transmission method and an apparatus, to help accurately determine a DCI format and improve information transmission performance when one piece of DCI is used to schedule data transmission of a plurality of scheduled cells.

According to a first aspect, a downlink control information transmission method is provided. The method is performed by a terminal device and includes: receiving first cross carrier scheduling configuration information, where the first cross carrier scheduling configuration information indicates the terminal device to monitor a first downlink control information DCI format, and the first DCI format can be used to schedule data transmission of two or more cells; when a first cell is in an inactive mode or a dormancy mode, determining a quantity of information bits of the first DCI format based on a first bandwidth part BWP of the first cell; and monitoring the first DCI format based on the quantity of information bits of the first DCI format.

The first DCI format being used to schedule data transmission of two or more cells means that the first DCI format can be used to schedule uplink data transmission and downlink data transmission of the two or more cells. Optionally, the first DCI format can be used to schedule data transmission of the first cell. The terminal device may detect the first DCI format in a second cell. The first cell is different from the second cell. For example, the first cell may be a secondary cell of the terminal device, and the second cell may be a primary cell of the terminal device. The terminal monitoring the first DCI format based on the quantity of information bits of the first DCI format may be understood as that the terminal determines a DCI size of the first DCI format based on the quantity of information bits of the first DCI format and a quantity of information bits of another DCI format, and monitors the first DCI format based on the DCI size of the first DCI format. In this application, if DCI size alignment needs to be performed on the first DCI format and the another DCI format, the quantity of information bits of the first DCI format is a quantity of information bits of the first DCI format before the DCI size alignment, a quantity of information bits of the first DCI format before bit padding, or a quantity of information bits of the first DCI format before bit truncation.

According to the technical solution of this application, one piece of DCI is used to schedule data transmission of a plurality of cells, and when the first cell is in an active mode or the dormancy mode, a format of the DCI is determined based on a BWP ID of the first cell. This helps accurately determine the DCI format and improve information transmission performance.

With reference to the first aspect, in some implementations of the first aspect, the first DCI format can be used to simultaneously schedule downlink data transmission of two or more cells; the first DCI format can be used to simultaneously schedule uplink data transmission of two or more cells; or the first DCI format can be used to simultaneously schedule data transmission of two or more cells, and the data transmission is uplink data transmission or downlink data transmission.

With reference to the first aspect, in some implementations of the first aspect, the first BWP is one of a last non-dormant active uplink BWP used before the first cell is in a current inactive mode or dormancy mode; a last non-dormant active downlink BWP used before the first cell is in the current inactive mode or dormancy mode; a 1st active uplink BWP that is configured for the first cell and that is used when the first cell is switched from the inactive mode to an active mode; a 1st active downlink BWP that is configured for the first cell and that is used when the first cell is switched from the inactive mode to the active mode; a 1st corresponding non-dormant BWP of the first cell within active time; a 1st corresponding non-dormant BWP of the first cell outside active time; an uplink BWP whose identifier ID is the same as an identifier of the 1st corresponding non-dormant BWP of the first cell within active time; an uplink BWP whose ID is the same as an ID of the 1st corresponding non-dormant BWP of the first cell outside active time; or a current active uplink BWP. In this application, a non-dormant active uplink BWP of the first cell is an active uplink BWP used when the first cell is in the active mode and a non-dormancy mode, or an active uplink BWP used when the first cell is in the active mode.

With reference to the first aspect, in some implementations of the first aspect, the determining a quantity of information bits of the first DCI format based on a first BWP of the first cell may specifically include: determining the quantity of information bits of the first DCI format based on the first BWP and a third BWP of the first cell. The first BWP is a last non-dormant active downlink BWP used before the first cell is in the current inactive mode or dormancy mode; a 1st active downlink BWP that is configured for the first cell and that is used when the first cell is switched from the inactive mode to an active mode; a 1st corresponding non-dormant BWP of the first cell within active time; or a 1st corresponding non-dormant BWP of the first cell outside active time. The third BWP is one of a last non-dormant active uplink BWP used before the first cell is in the current inactive mode or dormancy mode; a 1st active uplink BWP that is configured for the first cell and that is used when the first cell is switched from the inactive mode to the active mode; an uplink BWP whose identifier ID is the same as an ID of the 1st corresponding non-dormant BWP of the first cell within active time; an uplink BWP whose ID is the same as an ID of the 1st corresponding non-dormant BWP of the first cell outside active time; or a current active uplink BWP.

With reference to the first aspect, in some implementations of the first aspect, when the first cell is in the inactive mode, the first BWP is the last non-dormant active downlink BWP used before the first cell is in the current inactive mode, and the third BWP is the last non-dormant active uplink BWP used before the first cell is in the current inactive mode; when the 1st active downlink BWP that is configured for the first cell and that is used when the first cell is switched from the inactive mode to the active mode is a non-dormant BWP, the first BWP is the 1st active downlink BWP that is configured for the first cell and that is used when the first cell is switched from the inactive mode to the active mode, and the third BWP is the 1st active uplink BWP that is configured for the first cell and that is used when the first cell is switched from the inactive mode to the active mode; when the 1st active downlink BWP that is configured for the first cell and that is used when the first cell is switched from the inactive mode to the active mode is a dormant BWP, and the 1st corresponding non-dormant BWP within active time is preconfigured for the first cell, the first BWP is the 1st corresponding non-dormant BWP within active time, and the third BWP is the 1st active uplink BWP that is configured for the first cell and that is used when the first cell is switched from the inactive mode to the active mode; when the 1st active downlink BWP that is configured for the first cell and that is used when the first cell is switched from the inactive mode to the active mode is a dormant BWP, and the 1st corresponding non-dormant BWP within active time is not preconfigured for the first cell, the first BWP is the 1st corresponding non-dormant BWP outside active time, and the third BWP is the 1st active uplink BWP that is configured for the first cell and that is used when the first cell is switched from the inactive mode to the active mode; when the 1st active downlink BWP that is configured for the first cell and that is used when the first cell is switched from the inactive mode to the active mode is a dormant BWP, and the 1st corresponding non-dormant BWP within active time is preconfigured for the first cell, the first BWP is the 1st corresponding non-dormant BWP within active time, and the third BWP is the uplink BWP whose ID is the same as the ID of the 1st corresponding non-dormant BWP of the first cell within active time; or when the 1st active downlink BWP that is configured for the first cell and that is used when the first cell is switched from the inactive mode to the active mode is a dormant BWP, and the 1st corresponding non-dormant BWP within active time is not preconfigured for the first cell, the first BWP is the 1st corresponding non-dormant BWP outside active time, and the third BWP is the uplink BWP whose ID is the same as the ID of the 1st corresponding non-dormant BWP of the first cell outside active time.

With reference to the first aspect, in some implementations of the first aspect, when the first cell is in the dormancy mode, the first BWP is the last non-dormant active downlink BWP used before the first cell is in the current dormancy mode, and the third BWP is the last non-dormant active uplink BWP used before the first cell is in the current dormancy mode; when the 1st corresponding non-dormant BWP within active time is preconfigured for the first cell, the first BWP is the 1st corresponding non-dormant BWP within active time, and the third BWP is the current active uplink BWP; when the 1st corresponding non-dormant BWP within active time is not preconfigured for the first cell, the first BWP is the 1st corresponding non-dormant BWP outside active time, and the third BWP is the current active uplink BWP; when the 1st corresponding non-dormant BWP within active time is preconfigured for the first cell, the first BWP is the 1st corresponding non-dormant BWP within active time, and the third BWP is the uplink BWP whose ID is the same as the ID of the 1st corresponding non-dormant BWP of the first cell within active time; when the 1st corresponding non-dormant BWP within active time is not preconfigured for the first cell, the first BWP is the 1st corresponding non-dormant BWP outside active time, and the third BWP is the uplink BWP whose ID is the same as the ID of the 1st corresponding non-dormant BWP of the first cell outside active time; when a dormancy indication indicating that the first cell enters the dormancy mode is received within active time, the first BWP is the 1st corresponding non-dormant BWP within active time, and the third BWP is the current active uplink BWP; when a dormancy indication indicating that the first cell enters the dormancy mode is received outside active time, the first BWP is the 1st corresponding non-dormant BWP outside active time, and the third BWP is the current active uplink BWP; when a dormancy indication indicating that the first cell enters the dormancy mode is received within active time, the first BWP is the 1st corresponding non-dormant BWP within active time, and the third BWP is the uplink BWP whose ID is the same as the ID of the 1st corresponding non-dormant BWP of the first cell within active time; or when a dormancy indication indicating that the first cell enters the dormancy mode is received outside active time, the first BWP is the 1st corresponding non-dormant BWP outside active time, and the third BWP is the uplink BWP whose ID is the same as the ID of the 1st corresponding non-dormant BWP of the first cell outside active time.

With reference to the first aspect, in some implementations of the first aspect, before the determining a quantity of information bits of the first DCI format, the method further includes: determining a first BWP ID, where the first BWP ID is an ID of the first BWP.

With reference to the first aspect, in some implementations of the first aspect, the determining a first BWP ID includes: determining that the first BWP ID is a first preset value.

With reference to the first aspect, in some implementations of the first aspect, the determining a first BWP ID includes: determining that a bit width of a BWP indicator field of the first cell in the first DCI format is M bits, and determining that the first BWP ID is a largest value corresponding to the M bits, where M is a positive integer.

With reference to the first aspect, in some other implementations of the first aspect, when the first cell is in the inactive mode, the determining a first BWP ID includes: determining that the first BWP ID is an ID of a 1st active BWP used when the first cell is switched from the inactive mode to the active mode; or determining that the first BWP ID is an ID of an active BWP used before the first cell is switched from the active mode to the current inactive mode.

With reference to the first aspect, in still some implementations of the first aspect, when the first cell is in the inactive mode, the determining a first BWP ID includes: when a dedicated inactive BWP ID is preconfigured for the first cell, determining that the first BWP ID is the dedicated inactive BWP ID; or when a dormant BWP ID is preconfigured for the first cell, and a dedicated inactive BWP ID is not preconfigured for the first cell, the first BWP ID is the dormant BWP ID.

With reference to the first aspect, in still some implementations of the first aspect, when the first cell is in the dormancy mode, the determining a first BWP ID includes: when a 1st corresponding non-dormant BWP ID within active time is preconfigured for the first cell, determining that the first BWP ID is the 1st corresponding non-dormant BWP ID within active time; or when a 1st corresponding non-dormant BWP ID outside active time is preconfigured for the first cell, and a 1st corresponding non-dormant BWP ID within active time is not preconfigured for the first cell, determining that the first BWP ID is the 1st corresponding non-dormant BWP ID outside active time.

With reference to the first aspect, in still some implementations of the first aspect, when the first cell is in the dormancy mode, the determining a first BWP ID includes: receiving a second DCI format; switching an active downlink BWP of the first cell to a dormant BWP based on the second DCI format; and when the second DCI format is received within active time, determining that the first BWP ID is a 1st corresponding non-dormant BWP ID within active time; or when the second DCI format is received outside active time, determining that the first BWP ID is a 1st corresponding non-dormant BWP ID outside active time.

With reference to the first aspect, in still some implementations of the first aspect, the determining a first BWP ID includes: when a dormant BWP ID is preconfigured for the first cell, determining that the first BWP ID is the dormant BWP ID.

With reference to the first aspect, in some implementations of the first aspect, the first cell operates in a time division duplex TDD mode, and the first DCI format is used to schedule downlink data transmission. The method further includes: receiving second cross carrier scheduling configuration information, where the second cross carrier scheduling configuration information indicates the terminal device to monitor a second downlink control information DCI format, and the second DCI format can be used to schedule uplink data transmission of two or more cells; when the first cell is in the inactive mode or the dormancy mode, determining a quantity of information bits of the second DCI format based on a second BWP of the first cell, where the ID of the first BWP is the same as an ID of the second BWP; and monitoring the second DCI format based on the quantity of information bits of the second DCI format.

With reference to the first aspect, in some other implementations of the first aspect, the first cell operates in a frequency division duplex FDD mode, and the first DCI format is used to schedule downlink data transmission. The method further includes: receiving second cross carrier scheduling configuration information, where the second cross carrier scheduling configuration information indicates the terminal device to monitor a second downlink control information DCI format, and the second DCI format can be used to schedule uplink data transmission of two or more cells; when the first cell is in the dormancy mode, determining a quantity of information bits of the second DCI format based on a second BWP of the first cell, where the second BWP is an active uplink BWP of the first cell; and monitoring the second DCI format based on the quantity of information bits of the second DCI format.

With reference to the first aspect, in some implementations of the first aspect, the determining a quantity of information bits of the first DCI format based on a first BWP ID of the first cell further includes: determining the quantity of information bits of the first DCI format based on a configuration of a BWP whose ID is the first BWP ID in the first cell.

With reference to the first aspect, in some implementations of the first aspect, the method further includes: determining, based on the first BWP ID of the first cell, the quantity of information bits of a specific indicator field corresponding to the first cell in the first DCI format.

According to a second aspect, a downlink control information transmission method is provided. The method is performed by a network device and includes: sending first cross carrier scheduling configuration information, where the first cross carrier scheduling configuration information indicates a terminal device to monitor a first downlink control information DCI format, and the first DCI format can be used to schedule data transmission of two or more cells; when a first cell is in an inactive mode or a dormancy mode, determining a quantity of information bits of the first DCI format based on a first bandwidth part BWP of the first cell; and monitoring the first DCI format based on the quantity of information bits of the first DCI format.

The network device sending the first DCI format based on the quantity of information bits of the first DCI format may be understood as that the network device determines a DCI size of the first DCI format based on the quantity of information bits of the first DCI format and a quantity of information bits of another DCI format, and sends the first DCI format based on the DCI size of the first DCI format. In this application, if DCI size alignment needs to be performed on the first DCI format and the another DCI format, the quantity of information bits of the first DCI format is a quantity of information bits of the first DCI format before the DCI size alignment, a quantity of information bits of the first DCI format before bit padding, or a quantity of information bits of the first DCI format before bit truncation.

According to the technical solution of this application, one piece of DCI is used to schedule data transmission of a plurality of cells, and when the first cell is in an active mode or the dormancy mode, a format of the DCI is determined based on a BWP ID of the first cell. This helps accurately determine the DCI format and improve information transmission performance.

With reference to the second aspect, in some implementations of the second aspect, the first DCI format can be used to simultaneously schedule downlink data transmission of two or more cells; the first DCI format can be used to simultaneously schedule uplink data transmission of two or more cells; or the first DCI format can be used to simultaneously schedule data transmission of two or more cells, and the data transmission is uplink data transmission or downlink data transmission.

With reference to the second aspect, in some implementations of the second aspect, the first BWP is one of a last non-dormant active uplink BWP used before the first cell is in a current inactive mode or dormancy mode; a last non-dormant active downlink BWP used before the first cell is in the current inactive mode or dormancy mode; a 1st active uplink BWP that is configured for the first cell and that is used when the first cell is switched from the inactive mode to an active mode; a 1st active downlink BWP that is configured for the first cell and that is used when the first cell is switched from the inactive mode to the active mode; a 1st corresponding non-dormant BWP of the first cell within active time; a 1st corresponding non-dormant BWP of the first cell outside active time; an uplink BWP whose identifier ID is the same as an identifier of the 1st corresponding non-dormant BWP of the first cell within active time; an uplink BWP whose ID is the same as an ID of the 1st corresponding non-dormant BWP of the first cell outside active time; or a current active uplink BWP. In this application, a non-dormant active uplink BWP of the first cell is an active uplink BWP used when the first cell is in the active mode and a non-dormancy mode, or an active uplink BWP used when the first cell is in the active mode.

With reference to the second aspect, in some implementations of the second aspect, the determining a quantity of information bits of the first DCI format based on a first BWP of the first cell may specifically include: determining the quantity of information bits of the first DCI format based on the first BWP and a third BWP of the first cell. The first BWP is a last non-dormant active downlink BWP used before the first cell is in the current inactive mode or dormancy mode; a 1st active downlink BWP that is configured for the first cell and that is used when the first cell is switched from the inactive mode to an active mode; a 1st corresponding non-dormant BWP of the first cell within active time; or a 1st corresponding non-dormant BWP of the first cell outside active time. The third BWP is one of a last non-dormant active uplink BWP used before the first cell is in the current inactive mode or dormancy mode; a 1st active uplink BWP that is configured for the first cell and that is used when the first cell is switched from the inactive mode to the active mode; an uplink BWP whose identifier ID is the same as an ID of the 1st corresponding non-dormant BWP of the first cell within active time; an uplink BWP whose ID is the same as an ID of the 1st corresponding non-dormant BWP of the first cell outside active time; or a current active uplink BWP.

With reference to the second aspect, in some implementations of the second aspect, when the first cell is in the inactive mode, the first BWP is the last non-dormant active downlink BWP used before the first cell is in the current inactive mode, and the third BWP is the last non-dormant active uplink BWP used before the first cell is in the current inactive mode; when the 1st active downlink BWP that is configured for the first cell and that is used when the first cell is switched from the inactive mode to the active mode is a non-dormant BWP, the first BWP is the 1st active downlink BWP that is configured for the first cell and that is used when the first cell is switched from the inactive mode to the active mode, and the third BWP is the 1st active uplink BWP that is configured for the first cell and that is used when the first cell is switched from the inactive mode to the active mode; when the 1st active downlink BWP that is configured for the first cell and that is used when the first cell is switched from the inactive mode to the active mode is a dormant BWP, and the 1st corresponding non-dormant BWP within active time is preconfigured for the first cell, the first BWP is the 1st corresponding non-dormant BWP within active time, and the third BWP is the 1st active uplink BWP that is configured for the first cell and that is used when the first cell is switched from the inactive mode to the active mode; when the 1st active downlink BWP that is configured for the first cell and that is used when the first cell is switched from the inactive mode to the active mode is a dormant BWP, and the 1st corresponding non-dormant BWP within active time is not preconfigured for the first cell, the first BWP is the 1st corresponding non-dormant BWP outside active time, and the third BWP is the 1st active uplink BWP that is configured for the first cell and that is used when the first cell is switched from the inactive mode to the active mode; when the 1st active downlink BWP that is configured for the first cell and that is used when the first cell is switched from the inactive mode to the active mode is a dormant BWP, and the 1st corresponding non-dormant BWP within active time is preconfigured for the first cell, the first BWP is the 1st corresponding non-dormant BWP within active time, and the third BWP is the uplink BWP whose ID is the same as the ID of the 1st corresponding non-dormant BWP of the first cell within active time; or when the 1st active downlink BWP that is configured for the first cell and that is used when the first cell is switched from the inactive mode to the active mode is a dormant BWP, and the 1st corresponding non-dormant BWP within active time is not preconfigured for the first cell, the first BWP is the 1st corresponding non-dormant BWP outside active time, and the third BWP is the uplink BWP whose ID is the same as the ID of the 1st corresponding non-dormant BWP of the first cell outside active time.

With reference to the second aspect, in some implementations of the second aspect, when the first cell is in the dormancy mode, the first BWP is the last non-dormant active downlink BWP used before the first cell is in the current dormancy mode, and the third BWP is the last non-dormant active uplink BWP used before the first cell is in the current dormancy mode; when the 1st corresponding non-dormant BWP within active time is preconfigured for the first cell, the first BWP is the 1st corresponding non-dormant BWP within active time, and the third BWP is the current active uplink BWP; when the 1st corresponding non-dormant BWP within active time is not preconfigured for the first cell, the first BWP is the 1st corresponding non-dormant BWP outside active time, and the third BWP is the current active uplink BWP; when the 1st corresponding non-dormant BWP within active time is preconfigured for the first cell, the first BWP is the 1st corresponding non-dormant BWP within active time, and the third BWP is the uplink BWP whose ID is the same as the ID of the 1st corresponding non-dormant BWP of the first cell within active time; when the 1st corresponding non-dormant BWP within active time is not preconfigured for the first cell, the first BWP is the 1st corresponding non-dormant BWP outside active time, and the third BWP is the uplink BWP whose ID is the same as the ID of the 1st corresponding non-dormant BWP of the first cell outside active time; when a dormancy indication indicating that the first cell enters the dormancy mode is received within active time, the first BWP is the 1st corresponding non-dormant BWP within active time, and the third BWP is the current active uplink BWP; when a dormancy indication indicating that the first cell enters the dormancy mode is received outside active time, the first BWP is the 1st corresponding non-dormant BWP outside active time, and the third BWP is the current active uplink BWP; when a dormancy indication indicating that the first cell enters the dormancy mode is received within active time, the first BWP is the 1st corresponding non-dormant BWP within active time, and the third BWP is the uplink BWP whose ID is the same as the ID of the 1st corresponding non-dormant BWP of the first cell within active time; or when a dormancy indication indicating that the first cell enters the dormancy mode is received outside active time, the first BWP is the 1st corresponding non-dormant BWP outside active time, and the third BWP is the uplink BWP whose ID is the same as the ID of the 1st corresponding non-dormant BWP of the first cell outside active time.

With reference to the second aspect, in some implementations of the second aspect, before the determining a quantity of information bits of the first DCI format, the method further includes: determining a first BWP ID, where the first BWP ID is an ID of the first BWP.

With reference to the second aspect, in some implementations of the second aspect, the determining a first BWP ID includes: determining that the first BWP ID is a first preset value.

With reference to the second aspect, in some implementations of the second aspect, the determining a first BWP ID includes: determining that a bit width of a BWP indicator field of the first cell in the first DCI format is M bits, and determining that the first BWP ID is a largest value corresponding to the M bits, where M is a positive integer.

With reference to the second aspect, in some other implementations of the second aspect, when the first cell is in the inactive mode, the determining a first BWP ID includes: determining that the first BWP ID is an ID of a 1st active BWP used when the first cell is switched from the inactive mode to the active mode; or determining that the first BWP ID is an ID of an active BWP used before the first cell is switched from the active mode to the current inactive mode.

With reference to the second aspect, in still some implementations of the second aspect, when the first cell is in the inactive mode, the determining a first BWP ID includes: when a dedicated inactive BWP ID is preconfigured for the first cell, determining that the first BWP ID is the dedicated inactive BWP ID; or when a dormant BWP ID is preconfigured for the first cell, and a dedicated inactive BWP ID is not preconfigured for the first cell, the first BWP ID is the dormant BWP ID.

With reference to the second aspect, in still some implementations of the second aspect, when the first cell is in the dormancy mode, the determining a first BWP ID includes: when a 1st corresponding non-dormant BWP ID within active time is preconfigured for the first cell, determining that the first BWP ID is the 1st corresponding non-dormant BWP ID within active time; or when a 1st corresponding non-dormant BWP ID outside active time is preconfigured for the first cell, and a 1st corresponding non-dormant BWP ID within active time is not preconfigured for the first cell, determining that the first BWP ID is the 1st corresponding non-dormant BWP ID outside active time.

With reference to the second aspect, in still some implementations of the second aspect, when the first cell is in the dormancy mode, the determining a first BWP ID includes: sending a second DCI format, and switching an active downlink BWP of the first cell to a dormant BWP based on the second DCI format; and when the second DCI format is sent within active time, determining that the first BWP ID is a 1st corresponding non-dormant BWP ID within active time; or when the second DCI format is sent outside active time, determining that the first BWP ID is a 1st corresponding non-dormant BWP ID outside active time.

With reference to the second aspect, in still some implementations of the second aspect, the determining a first BWP ID includes: when a dormant BWP ID is preconfigured for the first cell, determining that the first BWP ID is the dormant BWP ID.

With reference to the second aspect, in some implementations of the second aspect, the first cell operates in a time division duplex TDD mode, and the first DCI format is used to schedule downlink data transmission. The method further includes: sending second cross carrier scheduling configuration information, where the second cross carrier scheduling configuration information indicates the terminal device to monitor a second downlink control information DCI format, and the second DCI format can be used to schedule uplink data transmission of two or more cells; when the first cell is in the inactive mode or the dormancy mode, determining a quantity of information bits of the second DCI format based on a second BWP of the first cell, where the ID of the first BWP is the same as an ID of the second BWP; and monitoring the second DCI format based on the quantity of information bits of the second DCI format.

With reference to the second aspect, in some other implementations of the second aspect, the first cell operates in a frequency division duplex FDD mode, and the first DCI format is used to schedule downlink data transmission. The method further includes: sending second cross carrier scheduling configuration information, where the second cross carrier scheduling configuration information indicates the terminal device to monitor a second downlink control information DCI format, and the second DCI format can be used to schedule uplink data transmission of two or more cells; when the first cell is in the dormancy mode, determining a quantity of information bits of the second DCI format based on a second BWP of the first cell, where the second BWP is an active uplink BWP of the first cell; and monitoring the second DCI format based on the quantity of information bits of the second DCI format.

With reference to the second aspect, in some implementations of the second aspect, the determining a quantity of information bits of the first DCI format based on a first BWP ID of the first cell further includes: determining the quantity of information bits of the first DCI format based on a configuration of a BWP whose ID is the first BWP ID in the first cell.

With reference to the second aspect, in some implementations of the second aspect, the method further includes: determining, based on the first BWP ID of the first cell, a quantity of information bits of a specific indicator field corresponding to the first cell in the first DCI format.

According to a third aspect, a downlink control information transmission apparatus is provided. The apparatus is configured to implement a function of a terminal device according to the first aspect, or is a terminal device. The apparatus includes: a transceiver unit, configured to receive first cross carrier scheduling configuration information, where the first cross carrier scheduling configuration information indicates the terminal device to monitor a first downlink control information DCI format, and the first DCI format can be used to schedule data transmission of two or more cells; and a processing unit, configured to: when a first cell is in an inactive mode or a dormancy mode, determine a quantity of information bits of the first DCI format based on a first bandwidth part BWP of the first cell. The transceiver unit is further configured to monitor the first DCI format based on the quantity of information bits of the first DCI format.

With reference to the third aspect, in some implementations of the third aspect, the first DCI format can be used to simultaneously schedule downlink data transmission of two or more cells; the first DCI format can be used to simultaneously schedule uplink data transmission of two or more cells; or the first DCI format can be used to simultaneously schedule data transmission of two or more cells, and the data transmission is uplink data transmission or downlink data transmission.

With reference to the third aspect, in some implementations of the third aspect, the first BWP is one of a last non-dormant active uplink BWP used before the first cell is in a current inactive mode or dormancy mode; a last non-dormant active downlink BWP used before the first cell is in the current inactive mode or dormancy mode; a 1st active uplink BWP that is configured for the first cell and that is used when the first cell is switched from the inactive mode to an active mode; a 1st active downlink BWP that is configured for the first cell and that is used when the first cell is switched from the inactive mode to the active mode; a 1st corresponding non-dormant BWP of the first cell within active time; a 1st corresponding non-dormant BWP of the first cell outside active time; an uplink BWP whose identifier ID is the same as an identifier of the 1st corresponding non-dormant BWP of the first cell within active time; an uplink BWP whose ID is the same as an ID of the 1st corresponding non-dormant BWP of the first cell outside active time; or a current active uplink BWP.

With reference to the third aspect, in some implementations of the third aspect, the processing unit is specifically configured to determine the quantity of information bits of the first DCI format based on the first BWP and a third BWP of the first cell. The first BWP is a last non-dormant active downlink BWP used before the first cell is in the current inactive mode or dormancy mode; a 1st active downlink BWP that is configured for the first cell and that is used when the first cell is switched from the inactive mode to an active mode; a 1st corresponding non-dormant BWP of the first cell within active time; or a 1st corresponding non-dormant BWP of the first cell outside active time. The third BWP is one of a last non-dormant active uplink BWP used before the first cell is in the current inactive mode or dormancy mode; a 1st active uplink BWP that is configured for the first cell and that is used when the first cell is switched from the inactive mode to the active mode; an uplink BWP whose identifier ID is the same as an ID of the 1st corresponding non-dormant BWP of the first cell within active time; an uplink BWP whose ID is the same as an ID of the 1st corresponding non-dormant BWP of the first cell outside active time; or a current active uplink BWP.

With reference to the third aspect, in some implementations of the third aspect, when the first cell is in the inactive mode, the first BWP is the last non-dormant active downlink BWP used before the first cell is in the current inactive mode, and the third BWP is the last non-dormant active uplink BWP used before the first cell is in the current inactive mode; when the 1st active downlink BWP that is configured for the first cell and that is used when the first cell is switched from the inactive mode to the active mode is a non-dormant BWP, the first BWP is the 1st active downlink BWP that is configured for the first cell and that is used when the first cell is switched from the inactive mode to the active mode, and the third BWP is the 1st active uplink BWP that is configured for the first cell and that is used when the first cell is switched from the inactive mode to the active mode; when the 1st active downlink BWP that is configured for the first cell and that is used when the first cell is switched from the inactive mode to the active mode is a dormant BWP, and the 1st corresponding non-dormant BWP within active time is preconfigured for the first cell, the first BWP is the 1st corresponding non-dormant BWP within active time, and the third BWP is the 1st active uplink BWP that is configured for the first cell and that is used when the first cell is switched from the inactive mode to the active mode; when the 1st active downlink BWP that is configured for the first cell and that is used when the first cell is switched from the inactive mode to the active mode is a dormant BWP, and the 1st corresponding non-dormant BWP within active time is not preconfigured for the first cell, the first BWP is the 1st corresponding non-dormant BWP outside active time, and the third BWP is the 1st active uplink BWP that is configured for the first cell and that is used when the first cell is switched from the inactive mode to the active mode; when the 1st active downlink BWP that is configured for the first cell and that is used when the first cell is switched from the inactive mode to the active mode is a dormant BWP, and the 1st corresponding non-dormant BWP within active time is preconfigured for the first cell, the first BWP is the 1st corresponding non-dormant BWP within active time, and the third BWP is the uplink BWP whose ID is the same as the ID of the 1st corresponding non-dormant BWP of the first cell within active time; or when the 1st active downlink BWP that is configured for the first cell and that is used when the first cell is switched from the inactive mode to the active mode is a dormant BWP, and the 1st corresponding non-dormant BWP within active time is not preconfigured for the first cell, the first BWP is the 1st corresponding non-dormant BWP outside active time, and the third BWP is the uplink BWP whose ID is the same as the ID of the 1st corresponding non-dormant BWP of the first cell outside active time.

With reference to the third aspect, in some implementations of the third aspect, when the first cell is in the dormancy mode, the first BWP is the last non-dormant active downlink BWP used before the first cell is in the current dormancy mode, and the third BWP is the last non-dormant active uplink BWP used before the first cell is in the current dormancy mode; when the 1st corresponding non-dormant BWP within active time is preconfigured for the first cell, the first BWP is the 1st corresponding non-dormant BWP within active time, and the third BWP is the current active uplink BWP; when the 1st corresponding non-dormant BWP within active time is not preconfigured for the first cell, the first BWP is the 1st corresponding non-dormant BWP outside active time, and the third BWP is the current active uplink BWP; when the 1st corresponding non-dormant BWP within active time is preconfigured for the first cell, the first BWP is the 1st corresponding non-dormant BWP within active time, and the third BWP is the uplink BWP whose ID is the same as the ID of the 1st

corresponding non-dormant BWP of the first cell within active time; when the 1st corresponding non-dormant BWP within active time is not preconfigured for the first cell, the first BWP is the 1st corresponding non-dormant BWP outside active time, and the third BWP is the uplink BWP whose ID is the same as the ID of the 1st corresponding non-dormant BWP of the first cell outside active time; when a dormancy indication indicating that the first cell enters the dormancy mode is received within active time, the first BWP is the 1st corresponding non-dormant BWP within active time, and the third BWP is the current active uplink BWP; when a dormancy indication indicating that the first cell enters the dormancy mode is received outside active time, the first BWP is the 1st corresponding non-dormant BWP outside active time, and the third BWP is the current active uplink BWP; when a dormancy indication indicating that the first cell enters the dormancy mode is received within active time, the first BWP is the 1st corresponding non-dormant BWP within active time, and the third BWP is the uplink BWP whose ID is the same as the ID of the 1st corresponding non-dormant BWP of the first cell within active time; or when a dormancy indication indicating that the first cell enters the dormancy mode is received outside active time, the first BWP is the 1st corresponding non-dormant BWP outside active time, and the third BWP is the uplink BWP whose ID is the same as the ID of the 1st corresponding non-dormant BWP of the first cell outside active time.

With reference to the third aspect, in some implementations of the third aspect, the processing unit is further configured to determine a first BWP ID, where the first BWP ID is an ID of the first BWP.

With reference to the third aspect, in some implementations of the third aspect, the processing unit is specifically configured to determine that the first BWP ID is a first preset value.

With reference to the third aspect, in some implementations of the third aspect, the processing unit is specifically configured to determine that a bit width of a BWP indicator field of the first cell in the first DCI format is M bits, and determining that the first BWP ID is a largest value corresponding to the M bits, where M is a positive integer.

With reference to the third aspect, in some other implementations of the third aspect, when the first cell is in the inactive mode, the processing unit is specifically configured to determine that the first BWP ID is an ID of a 1st active BWP used when the first cell is switched from the inactive mode to the active mode; or determine that the first BWP ID is an ID of an active BWP used before the first cell is switched from the active mode to the current inactive mode.

With reference to the third aspect, in still some implementations of the third aspect, when the first cell is in the inactive mode, the processing unit is specifically configured to: when a dedicated inactive BWP ID is preconfigured for the first cell, determine that the first BWP ID is the dedicated inactive BWP ID; or when a dormant BWP ID is preconfigured for the first cell, and a dedicated inactive BWP ID is not preconfigured for the first cell, the first BWP ID is the dormant BWP ID.

With reference to the third aspect, in still some implementations of the third aspect, when the first cell is in the dormancy mode, the processing unit is specifically configured to: when a 1st corresponding non-dormant BWP ID within active time is preconfigured for the first cell, determine that the first BWP ID is the 1st corresponding non-dormant BWP ID within active time; or when a 1st corresponding non-dormant BWP ID outside active time is preconfigured for the first cell, and a 1st corresponding non-dormant BWP ID within active time is not preconfigured for the first cell, determining that the first BWP ID is the 1st corresponding non-dormant BWP ID outside active time.

With reference to the third aspect, in still some implementations of the third aspect, when the first cell is in the dormancy mode, the transceiver unit is further configured to receive a second DCI format. The processing unit is specifically configured to switch an active downlink BWP of the first cell to a dormant BWP based on the second DCI format; and when the second DCI format is received within active time, determine that the first BWP ID is a 1st corresponding non-dormant BWP ID within active time; or when the second DCI format is received outside active time, determine that the first BWP ID is a 1st corresponding non-dormant BWP ID outside active time.

With reference to the third aspect, in still some implementations of the third aspect, the processing unit is specifically configured to: when a dormant BWP ID is preconfigured for the first cell, determine that the first BWP ID is the dormant BWP ID.

With reference to the third aspect, in some implementations of the third aspect, the first cell operates in a time division duplex TDD mode, and the first DCI format is used to schedule downlink data transmission. The transceiver unit is further configured to receive second cross carrier scheduling configuration information, where the second cross carrier scheduling configuration information indicates the terminal device to monitor a second downlink control information DCI format, and the second DCI format can be used to schedule uplink data transmission of two or more cells. The processing unit is specifically configured to: when the first cell is in the inactive mode or the dormancy mode, determine a quantity of information bits of the second DCI format based on a second BWP of the first cell, where the ID of the first BWP is the same as an ID of the second BWP; and monitor the second DCI format based on the quantity of information bits of the second DCI format.

With reference to the third aspect, in some other implementations of the third aspect, the first cell operates in a frequency division duplex FDD mode, and the first DCI format is used to schedule downlink data transmission. The transceiver unit is further configured to receive second cross carrier scheduling configuration information, where the second cross carrier scheduling configuration information indicates the terminal device to monitor a second downlink control information DCI format, and the second DCI format can be used to schedule uplink data transmission of two or more cells. The processing unit is specifically configured to: when the first cell is in the dormancy mode, determine a quantity of information bits of the second DCI format based on a second BWP of the first cell, where the second BWP is an active uplink BWP of the first cell; and monitor the second DCI format based on the quantity of information bits of the second DCI format.

With reference to the third aspect, in some implementations of the third aspect, the processing unit is specifically configured to determine the quantity of information bits of the first DCI format based on a configuration of a BWP whose ID is the first BWP ID in the first cell.

With reference to the third aspect, in some implementations of the third aspect, the processing unit is specifically configured to determine, based on the first BWP ID of the first cell, a quantity of information bits of a specific indicator field corresponding to the first cell in the first DCI format.

According to a fourth aspect, a downlink control information transmission apparatus is provided. The apparatus is configured to implement a function of a network device according to the second aspect, or is a network device. The apparatus includes: a transceiver unit, configured to send first cross carrier scheduling configuration information, where the first cross carrier scheduling configuration information indicates a terminal device to monitor a first downlink control information DCI format, and the first DCI format can be used to schedule data transmission of two or more cells; and a processing unit, configured to: when a first cell is in an inactive mode or a dormancy mode, determine a quantity of information bits of the first DCI format based on a first bandwidth part BWP of the first cell. The transceiver unit is further configured to monitor the first DCI format based on the quantity of information bits of the first DCI format.

With reference to the fourth aspect, in some implementations of the fourth aspect, the first DCI format can be used to simultaneously schedule downlink data transmission of two or more cells; the first DCI format can be used to simultaneously schedule uplink data transmission of two or more cells; or the first DCI format can be used to simultaneously schedule data transmission of two or more cells, and the data transmission is uplink data transmission or downlink data transmission.

With reference to the fourth aspect, in some implementations of the fourth aspect, the first BWP is one of a last non-dormant active uplink BWP used before the first cell is in a current inactive mode or dormancy mode; a last non-dormant active downlink BWP used before the first cell is in the current inactive mode or dormancy mode; a 1st active uplink BWP that is configured for the first cell and that is used when the first cell is switched from the inactive mode to an active mode; a 1st active downlink BWP that is configured for the first cell and that is used when the first cell is switched from the inactive mode to the active mode; a 1st corresponding non-dormant BWP of the first cell within active time; a 1st corresponding non-dormant BWP of the first cell outside active time; an uplink BWP whose identifier ID is the same as an identifier of the 1st corresponding non-dormant BWP of the first cell within active time; an uplink BWP whose ID is the same as an ID of the 1st corresponding non-dormant BWP of the first cell outside active time; or a current active uplink BWP.

With reference to the fourth aspect, in some implementations of the fourth aspect, the processing unit is specifically configured to determine the quantity of information bits of the first DCI format based on the first BWP and a third BWP of the first cell. The first BWP is a last non-dormant active downlink BWP used before the first cell is in the current inactive mode or dormancy mode; a 1st active downlink BWP that is configured for the first cell and that is used when the first cell is switched from the inactive mode to an active mode; a 1st corresponding non-dormant BWP of the first cell within active time; or a 1st corresponding non-dormant BWP of the first cell outside active time. The third BWP is one of a last non-dormant active uplink BWP used before the first cell is in the current inactive mode or dormancy mode; a 1st active uplink BWP that is configured for the first cell and that is used when the first cell is switched from the inactive mode to the active mode; an uplink BWP whose identifier ID is the same as an ID of the 1st corresponding non-dormant BWP of the first cell within active time; an uplink BWP whose ID is the same as an ID of the 1st corresponding non-dormant BWP of the first cell outside active time; or a current active uplink BWP.

With reference to the fourth aspect, in some implementations of the fourth aspect, when the first cell is in the inactive mode, the first BWP is the last non-dormant active downlink BWP used before the first cell is in the current inactive mode, and the third BWP is the last non-dormant active uplink BWP used before the first cell is in the current inactive mode; when the 1st active downlink BWP that is configured for the first cell and that is used when the first cell is switched from the inactive mode to the active mode is a non-dormant BWP, the first BWP is the 1st active downlink BWP that is configured for the first cell and that is used when the first cell is switched from the inactive mode to the active mode, and the third BWP is the 1st active uplink BWP that is configured for the first cell and that is used when the first cell is switched from the inactive mode to the active mode; when the 1st active downlink BWP that is configured for the first cell and that is used when the first cell is switched from the inactive mode to the active mode is a dormant BWP, and the 1st corresponding non-dormant BWP within active time is preconfigured for the first cell, the first BWP is the 1st corresponding non-dormant BWP within active time, and the third BWP is the 1st active uplink BWP that is configured for the first cell and that is used when the first cell is switched from the inactive mode to the active mode; when the 1st active downlink BWP that is configured for the first cell and that is used when the first cell is switched from the inactive mode to the active mode is a dormant BWP, and the 1st corresponding non-dormant BWP within active time is not preconfigured for the first cell, the first BWP is the 1st corresponding non-dormant BWP outside active time, and the third BWP is the 1st active uplink BWP that is configured for the first cell and that is used when the first cell is switched from the inactive mode to the active mode; when the 1st active downlink BWP that is configured for the first cell and that is used when the first cell is switched from the inactive mode to the active mode is a dormant BWP, and the 1st corresponding non-dormant BWP within active time is preconfigured for the first cell, the first BWP is the 1st corresponding non-dormant BWP within active time, and the third BWP is the uplink BWP whose ID is the same as the ID of the 1st corresponding non-dormant BWP of the first cell within active time; or when the 1st active downlink BWP that is configured for the first cell and that is used when the first cell is switched from the inactive mode to the active mode is a dormant BWP, and the 1st corresponding non-dormant BWP within active time is not preconfigured for the first cell, the first BWP is the 1st corresponding non-dormant BWP outside active time, and the third BWP is the uplink BWP whose ID is the same as the ID of the 1st corresponding non-dormant BWP of the first cell outside active time.

With reference to the fourth aspect, in some implementations of the fourth aspect, when the first cell is in the dormancy mode, the first BWP is the last non-dormant active downlink BWP used before the first cell is in the current dormancy mode, and the third BWP is the last non-dormant active uplink BWP used before the first cell is in the current dormancy mode; when the 1st corresponding non-dormant BWP within active time is preconfigured for the first cell, the first BWP is the 1st corresponding non-dormant BWP within active time, and the third BWP is the current active uplink BWP; when the 1st corresponding non-dormant BWP within active time is not preconfigured for the first cell, the first BWP is the 1st corresponding non-dormant BWP outside active time, and the third BWP is the current active uplink BWP; when the 1st corresponding non-dormant BWP within active time is preconfigured for the first cell, the first BWP is the 1st corresponding non-dormant BWP within active time, and the third BWP is the uplink BWP whose ID is the same as the ID of the 1st corresponding non-dormant BWP of the first cell within active time; when the 1st corresponding non-dormant BWP within active time is not preconfigured for the first cell, the first BWP is the 1st corresponding non-dormant BWP outside active time, and the third BWP is the uplink BWP whose ID is the same as the ID of the 1st corresponding non-dormant BWP of the first cell outside active time; when a dormancy indication indicating that the first cell enters the dormancy mode is received within active time, the first BWP is the 1st corresponding non-dormant BWP within active time, and the third BWP is the current active uplink BWP; when a dormancy indication indicating that the first cell enters the dormancy mode is received outside active time, the first BWP is the 1st corresponding non-dormant BWP outside active time, and the third BWP is the current active uplink BWP; when a dormancy indication indicating that the first cell enters the dormancy mode is received within active time, the first BWP is the 1st corresponding non-dormant BWP within active time, and the third BWP is the uplink BWP whose ID is the same as the ID of the 1st corresponding non-dormant BWP of the first cell within active time; or when a dormancy indication indicating that the first cell enters the dormancy mode is received outside active time, the first BWP is the 1st corresponding non-dormant BWP outside active time, and the third BWP is the uplink BWP whose ID is the same as the ID of the 1st corresponding non-dormant BWP of the first cell outside active time.

With reference to the fourth aspect, in some implementations of the fourth aspect, the processing unit is specifically configured to determine a first BWP ID, where the first BWP ID is an ID of the first BWP.

With reference to the fourth aspect, in some implementations of the fourth aspect, the processing unit is specifically configured to determine that the first BWP ID is a first preset value.

With reference to the fourth aspect, in some implementations of the fourth aspect, the processing unit is specifically configured to determine that a bit width of a BWP indicator field of the first cell in the first DCI format is M bits, and determining that the first BWP ID is a largest value corresponding to the M bits, where M is a positive integer.

With reference to the fourth aspect, in some other implementations of the fourth aspect, when the first cell is in the inactive mode, the processing unit is specifically configured to determine that the first BWP ID is an ID of a 1st active BWP used when the first cell is switched from the inactive mode to the active mode; or determine that the first BWP ID is an ID of an active BWP used before the first cell is switched from the active mode to the current inactive mode.

With reference to the fourth aspect, in still some implementations of the fourth aspect, when the first cell is in the inactive mode, the processing unit is specifically configured to: when a dedicated inactive BWP ID is preconfigured for the first cell, determine that the first BWP ID is the dedicated inactive BWP ID; or when a dormant BWP ID is preconfigured for the first cell, and a dedicated inactive BWP ID is not preconfigured for the first cell, the first BWP ID is the dormant BWP ID.

With reference to the fourth aspect, in still some implementations of the fourth aspect, when the first cell is in the dormancy mode, the processing unit is specifically configured to: when a 1st corresponding non-dormant BWP ID within active time is preconfigured for the first cell, determine that the first BWP ID is the 1st corresponding non-dormant BWP ID within active time; or when a 1st corresponding non-dormant BWP ID outside active time is preconfigured for the first cell, and a 1st corresponding non-dormant BWP ID within active time is not preconfigured for the first cell, determine that the first BWP ID is the 1st corresponding non-dormant BWP ID outside active time.

With reference to the fourth aspect, in still some implementations of the fourth aspect, when the first cell is in the dormancy mode, the transceiver unit is further configured to send a second DCI format, and switch an active downlink BWP of the first cell to a dormant BWP based on the second DCI format. The processing unit is specifically configured to: when the second DCI format is sent within active time, determine that the first BWP ID is a 1st corresponding non-dormant BWP ID within active time. Alternatively, the processing unit is specifically configured to: when the second DCI format is sent outside active time, determine that the first BWP ID is a 1st corresponding non-dormant BWP ID outside active time.

With reference to the fourth aspect, in still some implementations of the fourth aspect, the processing unit is specifically configured to: when a dormant BWP ID is preconfigured for the first cell, determine that the first BWP ID is the dormant BWP ID.

With reference to the fourth aspect, in some implementations of the fourth aspect, the first cell operates in a time division duplex TDD mode, and the first DCI format is used to schedule downlink data transmission. The transceiver unit is further configured to send second cross carrier scheduling configuration information, where the second cross carrier scheduling configuration information indicates the terminal device to monitor a second downlink control information DCI format, and the second DCI format can be used to schedule uplink data transmission of two or more cells. The processing unit is specifically configured to: when the first cell is in the inactive mode or the dormancy mode, determine a quantity of information bits of the second DCI format based on a second BWP of the first cell, where the ID of the first BWP is the same as an ID of the second BWP; and monitor the second DCI format based on the quantity of information bits of the second DCI format.

With reference to the fourth aspect, in some other implementations of the fourth aspect, the first cell operates in a frequency division duplex FDD mode, and the first DCI format is used to schedule downlink data transmission. The transceiver unit is further configured to send second cross carrier scheduling configuration information, where the second cross carrier scheduling configuration information indicates the terminal device to monitor a second downlink control information DCI format, and the second DCI format can be used to schedule uplink data transmission of two or more cells. The processing unit is specifically configured to: when the first cell is in the dormancy mode, determine a quantity of information bits of the second DCI format based on a second BWP of the first cell, where the second BWP is an active uplink BWP of the first cell; and monitor the second DCI format based on the quantity of information bits of the second DCI format.

With reference to the fourth aspect, in some implementations of the fourth aspect, the processing unit is specifically configured to determine the quantity of information bits of the first DCI format based on a configuration of a BWP whose ID is the first BWP ID in the first cell.

With reference to the fourth aspect, in some implementations of the fourth aspect, the processing unit is specifically configured to determine, based on the first BWP ID of the first cell, a quantity of information bits of a specific indicator field corresponding to the first cell in the first DCI format.

According to a fifth aspect, a downlink control information transmission method is provided. The method is performed by a terminal device. The method includes: receiving first cross carrier scheduling configuration information, where the first cross carrier scheduling configuration information indicates the terminal device to monitor a first downlink control information DCI format, the first DCI format can be used to simultaneously schedule data transmission of two or more cells, and the first DCI format can be used to schedule a first cell; when the first cell is switched from an active mode to an inactive mode, keeping a quantity of information bits of the first DCI format unchanged; when the first cell is switched from a non-dormancy mode to a dormancy mode, keeping a quantity of information bits of the first DCI format unchanged; when the first cell is switched from an inactive mode to an active mode, keeping a quantity of information bits of the first DCI format unchanged; or when the first cell is switched from a dormancy mode to a non-dormancy mode, keeping a quantity of information bits of the first DCI format unchanged; and monitoring the first DCI format based on the quantity of information bits of the first DCI format.

According to the technical solution of this application, one piece of DCI is used to schedule data transmission of a plurality of cells, and when a status of a scheduled cell changes, a quantity of information bits of the DCI is kept unchanged, to help accurately determine a DCI format, and reduce implementation complexity of the terminal.

With reference to the fifth aspect, in some implementations of the fifth aspect, the first DCI format can be used to simultaneously schedule downlink data transmission of two or more cells; the first DCI format can be used to simultaneously schedule uplink data transmission of two or more cells; or the first DCI format can be used to simultaneously schedule data transmission of two or more cells, and the data transmission is uplink data transmission or downlink data transmission.

According to a sixth aspect, a downlink control information transmission method is provided. The method is performed by a network device. The method includes: sending first cross carrier scheduling configuration information, where the first cross carrier scheduling configuration information indicates a terminal device to monitor a first downlink control information DCI format, the first DCI format can be used to schedule data transmission of two or more cells, and the first DCI format can be used to schedule a first cell; when the first cell is switched from an active mode to an inactive mode, keeping a quantity of information bits of the first DCI format unchanged; when the first cell is switched from a non-dormancy mode to a dormancy mode, keeping a quantity of information bits of the first DCI format unchanged; when the first cell is switched from an inactive mode to an active mode, keeping a quantity of information bits of the first DCI format unchanged; or when the first cell is switched from a dormancy mode to a non-dormancy mode, keeping a quantity of information bits of the first DCI format unchanged; and sending the first DCI format based on the quantity of information bits of the first DCI format.

According to the technical solution of this application, one piece of DCI is used to schedule data transmission of a plurality of cells, and when a status of a scheduled cell changes, a quantity of information bits of the DCI is kept unchanged, to help accurately determine a DCI format, and reduce implementation complexity of the network device.

With reference to the sixth aspect, in some implementations of the sixth aspect, the first DCI format can be used to simultaneously schedule downlink data transmission of two or more cells; the first DCI format can be used to simultaneously schedule uplink data transmission of two or more cells; or the first DCI format can be used to simultaneously schedule data transmission of two or more cells, and the data transmission is uplink data transmission or downlink data transmission.

According to a seventh aspect, a downlink control information transmission apparatus is provided. The apparatus is configured to implement a function of a terminal device according to the fifth aspect, or is a terminal device. The apparatus includes: a transceiver unit, configured to receive first cross carrier scheduling configuration information, where the first cross carrier scheduling configuration information indicates the terminal device to monitor a first downlink control information DCI format, the first DCI format can be used to schedule data transmission of two or more cells, and the first DCI format can be used to schedule a first cell; and a processing unit, configured to when the first cell is switched from an active mode to an inactive mode, keep a quantity of information bits of the first DCI format unchanged; when the first cell is switched from a non-dormancy mode to a dormancy mode, keep a quantity of information bits of the first DCI format unchanged; when the first cell is switched from an inactive mode to an active mode, keep a quantity of information bits of the first DCI format unchanged; or when the first cell is switched from a dormancy mode to a non-dormancy mode, keep a quantity of information bits of the first DCI format unchanged. The transceiver unit is further configured to monitor the first DCI format based on the quantity of information bits of the first DCI format.

With reference to the seventh aspect, in some implementations of the seventh aspect, the first DCI format can be used to simultaneously schedule downlink data transmission of two or more cells; the first DCI format can be used to simultaneously schedule uplink data transmission of two or more cells; or the first DCI format can be used to simultaneously schedule data transmission of two or more cells, and the data transmission is uplink data transmission or downlink data transmission.

According to an eighth aspect, a downlink control information transmission apparatus is provided. The apparatus is configured to implement a function of a network device according to the sixth aspect, or is a network device. The apparatus includes: a transceiver unit, configured to send first cross carrier scheduling configuration information, where the first cross carrier scheduling configuration information indicates the terminal device to monitor a first downlink control information DCI format, the first DCI format can be used to schedule data transmission of two or more cells, and the first DCI format can be used to schedule a first cell; and a processing unit, configured to when the first cell is switched from an active mode to an inactive mode, keep a quantity of information bits of the first DCI format unchanged; when the first cell is switched from a non-dormancy mode to a dormancy mode, keep a quantity of information bits of the first DCI format unchanged; when the first cell is switched from an inactive mode to an active mode, keep a quantity of information bits of the first DCI format unchanged; or when the first cell is switched from a dormancy mode to a non-dormancy mode, keep a quantity of information bits of the first DCI format unchanged. The transceiver unit is further configured to send the first DCI format based on the quantity of information bits of the first DCI format.

With reference to the eighth aspect, in some implementations of the eighth aspect, the first DCI format can be used to simultaneously schedule downlink data transmission of two or more cells; the first DCI format can be used to simultaneously schedule uplink data transmission of two or more cells; or the first DCI format can be used to simultaneously schedule data transmission of two or more cells, and the data transmission is uplink data transmission or downlink data transmission.

According to a ninth aspect, a communication apparatus is provided and includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement the method according to any one of the possible implementations of the first aspect or the fifth aspect through a logic circuit or by executing code instructions.

According to a tenth aspect, a communication apparatus is provided and includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement the method according to any one of the possible implementations of the second aspect or the sixth aspect through a logic circuit or by executing code instructions.

According to an eleventh aspect, a computer-readable storage medium is provided. The computer-readable storage medium stores a computer program or instructions. When the computer program or the instructions are executed, the method according to any one of the possible implementations of the first aspect or the second aspect and the fifth aspect or the sixth aspect is implemented.

According to a twelfth aspect, a computer program product including instructions is provided. When the instructions are run, the method according to any one of the possible implementations of the first aspect or the second aspect and the fifth aspect or the sixth aspect is implemented.

According to a thirteenth aspect, a computer program is provided. The computer program includes code or instructions, and when the code or the instructions are run, the method according to any one of the possible implementations of the first aspect or the second aspect and the fifth aspect or the sixth aspect is implemented.

According to a fourteenth aspect, a chip system is provided. The chip system includes a processor, and further includes a memory, configured to implement the method according to any one of the possible implementations of the first aspect or the second aspect and the fifth aspect or the sixth aspect. The chip system includes a chip, or includes a chip and another discrete component.

According to a fifteenth aspect, a communication system is provided, including a terminal device and a network device.

The terminal device is configured to implement the method according to the implementations of the first aspect, and the network device is configured to implement the method according to the implementations of the second aspect. Alternatively, the terminal device is configured to implement the method according to the implementations of the fifth aspect, and the network device is configured to implement the method according to the implementations of the sixth aspect.

In a possible design, the communication system further includes another device that interacts with the terminal device or the network device in the solutions provided in embodiments of this application.

## BRIEF DESCRIPTION OF DRAWINGS

FIG. 1 is a diagram of an architecture of a mobile communication system to which an embodiment of this application is applied;

FIG. 2 is a diagram of a DRX cycle and a PDCCH monitoring occasion;

FIG. 3 is a diagram of a DRX cycle and a radio frame;

FIG. 4 is a diagram of an example of a downlink control information transmission method according to this application;

FIG. 5 is a diagram of a first specific example of a downlink control information transmission method according to this application;

FIG. 6 is a diagram of a second specific example of a downlink control information transmission method according to this application;

FIG. 7 is a diagram of another example of a downlink control information transmission method according to this application;

FIG. 8 is a diagram of still another example of a downlink control information transmission method according to this application;

FIG. 9 is a diagram of an example of a communication apparatus according to this application; and

FIG. 10 is a diagram of another example of a communication apparatus according to this application.

## DESCRIPTION OF EMBODIMENTS

The following describes technical solutions of this application with reference to the accompanying drawings.

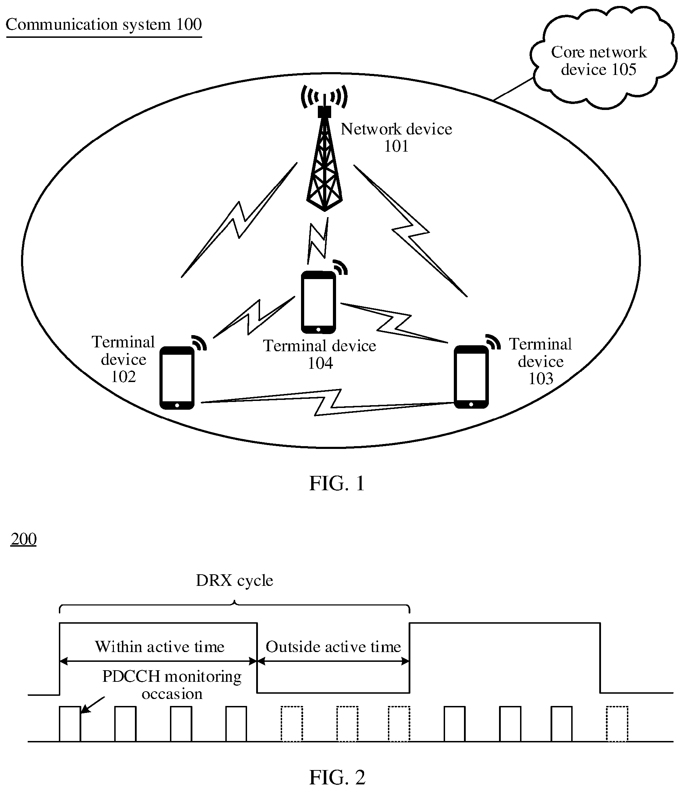

FIG. 1 is a diagram of an architecture of a mobile communication system to which an embodiment of this application is applied.

As shown in FIG. 1, the communication system 100 may include one or more network devices, for example, a network device 101 shown in FIG. 1. The communication system 100 may further include one or more terminal devices, for example, a terminal device 102, a terminal device 103, and a terminal device 104 shown in FIG. 1. The communication system 100 may support a sidelink (sidelink) communication technology, for example, sidelink communication between the terminal device 102 and the terminal device 103, and sidelink communication between the terminal device 102 and the terminal device 104.

It should be understood that FIG. 1 is merely a diagram. The communication system may further include another network device, for example, may further include a core network device 105, and a wireless relay device and a wireless backhaul device that are not shown in FIG. 1. A quantity of network devices and a quantity of terminal devices included in the mobile communication system are not limited in embodiments of this application.

The terminal device in embodiments of this application is a device having a wireless transceiver function, and may send a signal to the network device, or receive a signal from the network device. The terminal device may also be referred to as a terminal, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, automatic driving, telemedicine, a smart grid, smart furniture, a smart office, smart wearable, smart transportation, and a smart city. The terminal may be a mobile phone, a tablet computer, a computer having a wireless transceiver function, a wearable device, a vehicle, an airplane, a ship, a robot, a robotic arm, a smart home device, or the like. A specific technology and a specific device form that are used by the terminal are not limited in embodiments of this application.

The network device in embodiments of this application may be a radio access device that is used by the terminal to access the communication system in a wireless manner. The network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like, or may be a module or a unit that completes a part of functions of the base station, for example, may be a central unit (central unit, CU), or may be a distributed unit (distributed unit, DU). The CU herein completes functions of a radio resource control (radio resource control, RRC) protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete functions of some or all physical layers. For specific descriptions of the foregoing protocol layers, refer to related technical specifications in the 3rd generation partnership project (3rd generation partnership project, 3GPP). The network device may be a macro base station, may be a micro base station or an indoor base station, or may be a relay node, a donor node, or the like. A specific technology and a specific device form that are used by the network device are not limited in embodiments of this application.

Embodiments of this application may be applied to downlink signal transmission, or may be applied to uplink signal transmission. For the downlink signal transmission, a sending device is a network device, and a corresponding receiving device is a terminal. For the uplink signal transmission, a sending device is a terminal, and a corresponding receiving device is a network device.

Communication between the network device and the terminal and between terminals may be performed through a licensed spectrum, or may be performed through an unlicensed spectrum, or may be performed through both a licensed spectrum and an unlicensed spectrum. Communication may be performed between the network device and the terminal and between the terminals through a spectrum below 6 gigahertz (gigahertz, GHz), a spectrum above 6 GHz, or both a spectrum below 6 GHz and a spectrum above 6 GHz. A spectrum resource used between the network device and the terminal is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city. A function of the terminal may alternatively be performed by a module (for example, a chip or a modem) in the terminal, or may be performed by an apparatus including the function of the terminal.

To better describe implementations of this application, concepts related to embodiments of this application are first described before embodiments of this application are described.

1. Cell (cell) and carrier (carrier)

(1) Carrier

The carrier is a radio signal that is transmitted by a radio frequency device of a network device or a terminal and that has a specific frequency, bandwidth, and standard. The carrier is a body used to carry information in wireless communication. A carrier used by the network device to send information is referred to as a downlink carrier, and a carrier used by the terminal to send information is referred to as an uplink carrier.

(2) Cell

Coverage of each network device may be divided into one or more cells. In a current NR standard, one downlink carrier may be configured for one cell, and optionally, one uplink carrier may be configured for the cell. For a terminal, a cell that provides a service for the terminal is referred to as a serving cell.

(3) Carrier aggregation (carrier aggregation, CA) and dual connectivity (dual connectivity, DC)

To implement high-speed transmission, NR supports carrier aggregation and dual connectivity technologies. A terminal that supports CA or DC may simultaneously transmit data on a plurality of carriers, to improve a data transmission rate. Each carrier in CA is also referred to as a component carrier (component carrier, CC). In DC, a terminal establishes connections to a plurality of cells. These cells are classified into two groups: a master cell group (master cell group, MCG) and a secondary cell group (secondary cell group, SCG). If dual connectivity is not established, a group of cells communicating with the terminal is an MCG. A PCell in an MCG is a primary cell, a PCell in an SCG is a primary secondary cell (primary secondary cell, PSCell), and other cells in the MCG and SCG are secondary cells (secondary cell, SCell).

The terminal may simultaneously use a PCell in the MCG and the SCell in the MCG to transmit data by using the carrier aggregation technology, or may simultaneously use the PSCell in the SCG and the SCell in the SCG to transmit data by using the carrier aggregation technology.

In subsequent descriptions of this application, when this application is applied to the MCG, the PCell is a PCell in the MCG, and the SCell is an SCell in the MCG; or when this application is applied to the SCG, the PCell is a PSCell in the SCG, and the SCell is an SCell in the SCG.

2. Bandwidth part (bandwidth part, BWP) and bandwidth part switching

(1) BWP

A concept of the BWP is introduced in NR. One BWP is a segment of contiguous frequency resources on one carrier. After a BWP is configured and activated, the BWP is referred to as an active BWP. In a current version protocol, one terminal can have only one active downlink BWP on one downlink carrier, and can have only one active uplink BWP on one uplink carrier. Uplink data and control information sent by the terminal are sent in the active uplink BWP, and downlink data and control information is received in the active downlink BWP.

There may be one or more BWPs on one carrier, and a bandwidth of a BWP on one carrier is less than or equal to a bandwidth of the carrier.

(2) BWP switching

To enable the terminal to send and receive data in different BWPs at different moments based on a service requirement, NR supports BWP switching triggered by using DCI for scheduling data. The DCI is carried on a physical downlink control channel (physical downlink control channel, PDCCH).

A downlink BWP switching instruction may be carried in DCI format (format) 1_1 or DCI format 1_2 for scheduling a physical downlink shared channel (physical downlink shared channel, PDSCH), and an uplink BWP switching instruction may be carried in DCI format 0_1 or DCI format 0_2 for scheduling a physical uplink shared channel (physical uplink shared channel, PUSCH). After receiving the DCI, the terminal switches to a new BWP indicated by the DCI to send or receive data. It should be noted that the BWP switching herein is switching between non-dormant BWPs in the active BWP.

(3) BWP in frequency division duplex (frequency division duplex, FDD) and time division duplex (time division duplex, TDD)

NR spectrums are classified into a paired spectrum (Paired Spectrum) and an unpaired spectrum (Unpaired Spectrum). FDD is used in the paired spectrum and TDD is used in the unpaired spectrum. In an FDD mode, uplink BWPs and downlink BWPs of a cell can be independently switched, and a quantity of uplink BWPs may be the same as or different from a quantity of downlink BWPs. In the FDD mode, uplink BWP switching and downlink BWP switching can be independently performed. In a TDD mode, an uplink BWP and a downlink BWP of a cell are paired. In a pair of uplink and downlink BWPs, the uplink BWP and the downlink BWP may have a same center frequency and different bandwidths. In the FDD mode, BWP switching occurs simultaneously on an uplink and a downlink, that is, switching from a pair of BWPs to another pair of BWPs may be performed.

3. Carrier dormancy

Currently, a dormancy (dormancy) mechanism of the SCell is introduced in 3GPP release 16 (release 16, R16). Both uplink transmission and downlink transmission of a dormant (dormant) SCell are stopped, but the terminal still periodically measures the cell, and reports measurement information of the cell to the network device via another non-dormant cell. Switching between a dormancy behavior and a non-dormancy (non-dormancy) behavior of the SCell is implemented through BWP switching. When an SCell is indicated as dormancy, the terminal switches a current active downlink BWP to a dormant BWP in the SCell, and the terminal does not need to perform PDCCH monitoring in the dormant BWP; or when the SCell is a scheduled carrier in cross carrier scheduling, the terminal does not need to detect a PDCCH that is on a corresponding scheduling carrier and that is used to schedule the SCell. An identifier (identifier, ID) of the dormant BWP is indicated by a dormantBWP-Id (dormant BWP identifier) information element in RRC signaling.

Switching between a dormancy mode and a non-dormancy mode of the SCell is indicated by DCI.

(1) In a connected mode and without entering a connected mode discontinuous reception (connected mode discontinuous reception, C-DRX) mode (a non-C-DRX mode for short below) or in an active time period in a C-DRX mode, there are the following two indication manners:

Manner 1: A secondary cell dormancy indication (SCell dormancy indication) field in DCI format 0_1 or 1_1 indicates whether the SCell is dormancy or non-dormancy. In this case, the DCI may be used to schedule data simultaneously.

Manner 2: A specific field in DCI format 1_1 indicates whether the SCell is dormancy or non-dormancy. In this case, the DCI cannot be used to schedule data simultaneously.

(2) In a non-active time period in a C-DRX mode, there is one indication manner:

Manner 3: An SCell dormancy indication field in DCI format 2_6 indicates whether the SCell is dormancy or non-dormancy.

In this specification, unless otherwise specified, within active time (within active time) includes two cases: one is when the terminal is not configured with C-DRX, or the terminal does not enter the C-DRX mode, and the other is an active time period in the C-DRX mode. Outside active time (outside active time) is a non-active time period in which the terminal is in the C-DRX mode.

In this application, both within active time and outside active time are for a specific terminal.

For a cell, the network device may configure an identifier of a corresponding 1st non-dormant BWP within active time by using a firstWithinActiveTimeBWP-Id information element in RRC signaling, and configure an identifier of a 1st corresponding BWP outside active time by using a firstOutsideActiveTimeBWP-Id information element. If a PDCCH indicating to switch an active downlink BWP of a cell from a dormant BWP to a non-dormant BWP is received in a non-C-DRX mode of the cell or in an active time period in a C-DRX mode of the cell, a downlink BWP whose ID is firstWithinActiveTimeBWP-Id is activated when a state of the cell is switched from dormancy to non-dormancy. If a PDCCH indicating to switch an active downlink BWP of a cell from a dormant BWP to a non-dormant BWP is received in a non-active time period in a C-DRX mode of the cell, a downlink BWP whose ID is firstOutsideActiveTimeBWP-Id is activated when a state of the cell is switched from dormancy to non-dormancy.

There are two terminal capabilities: support receiving of an SCell dormancy indication with DCI format 0_1/1_1 within active time, and support receiving of an SCell dormancy indication with DCI format 2_6 outside active time. The terminal may not support the two capabilities, or may support one or both of the two capabilities, and notify, through capability reporting, the network device of a capability supported by the terminal.

In the TDD mode, uplink BWP switching and downlink BWP switching are bound. Therefore, when a downlink BWP of a cell is switched from a current active downlink BWP to a dormant BWP, an uplink BWP is also switched to an uplink BWP whose ID is dormantBWP-Id. When the downlink BWP of the cell is switched from the dormant BWP to a downlink BWP whose ID is firstWithinActiveTimeBWP-Id or a downlink BWP whose ID is firstOutsideActiveTimeBWP-Id, the uplink BWP is also switched to an uplink BWP whose ID is firstWithinActiveTimeBWP-Id or an uplink BWP whose ID is firstOutsideActiveTimeBWP-Id.

In the FDD mode, uplink BWP switching and downlink BWP switching are independent. Therefore, when a downlink BWP of a cell is switched from a current active downlink BWP to a dormant BWP, an uplink BWP of the cell is not switched. Similarly, when the downlink BWP of the cell is switched from the dormant BWP to a downlink BWP whose ID is firstWithinActiveTimeBWP-Id or a downlink BWP whose ID is firstOutsideActiveTimeBWP-Id, the uplink BWP is not switched. It should be noted that, when the SCell enters the dormancy mode, although the uplink BWP is not switched, sending on the uplink BWP is stopped, including a data channel, a control channel, a sounding reference signal (sounding reference signal, SRS), a physical random access channel (physical random access channel, PRACH), and the like.

There are two terminal capabilities: support receiving of an SCell dormancy indication with DCI format 0_1/1_1 within active time, and support receiving of an SCell dormancy indication with DCI format 2_6 outside active time. The terminal may not support the two capabilities, or may support one or both of the two capabilities, and notify, through capability reporting, the network device of a capability supported by the terminal.

The network side device may configure dormantBWP-Id for a terminal reporting that the terminal supports at least one of the two capabilities.

For a terminal that reports the capability of supporting receiving of the SCell dormancy indication with DCI format 0_1/1_1 within active time, the network device may configure firstWithinActiveTimeBWP-Id, or may not configure firstWithinActiveTimeBWP-Id. For a terminal that reports the capability of supporting receiving of the SCell dormancy indication with DCI format 2_6 outside active time, the network device may configure firstOutsideActiveTimeBWP-Id, or may not configure firstOutsideActiveTimeBWP-Id.

For a terminal that does not report the capability of supporting receiving of the SCell dormancy indication with DCI format 0_1/1_1 within active time, the network device cannot configure firstWithinActiveTimeBWP-Id. For a terminal that does not report the capability of supporting receiving of the SCell dormancy indication with DCI format 2_6 outside active time, the network device cannot configure firstOutsideActiveTimeBWP-Id.

The following describes a C-DRX mechanism. In the C-DRX mechanism, the terminal may periodically monitor a PDCCH based on a DRX cycle configured by the network device. As shown in FIG. 2, one DRX cycle usually includes two time periods: active time (active time) and non-active time (non-active time), where the non-active time may also be referred to as outside active time (outside active time). Within active time, the terminal needs to monitor the PDCCH on a PDCCH monitoring occasion. Within non-active time, the terminal does not need to monitor the PDCCH, to reduce power consumption of the terminal.

The active time includes running time of an on-duration timer (drx-onDurationTimer). The network device configures a length of drx-onDurationTimer for the terminal by using radio resource control (radio resource control, RRC) signaling. A long DRX cycle (Long DRX cycle) is used as an example. A parameter drx-LongCycle of a length of the long DRX cycle, a parameter start offset (drx-StartOffset) used to determine a start subframe of the DRX cycle, and a slot offset (drx-SlotOffset) in the start subframe of the DRX cycle are further configured. If the long DRX cycle is used, the terminal starts drx-onDurationTimer (onDurationTimer for short below) when a subframe number (subframe number) satisfies the following formula (1):

$$[(\text{SFN} \times 10) + \text{subframe number}] \bmod (\text{drx-LongCycle}) = \text{drx-StartOffset} \quad (1)$$

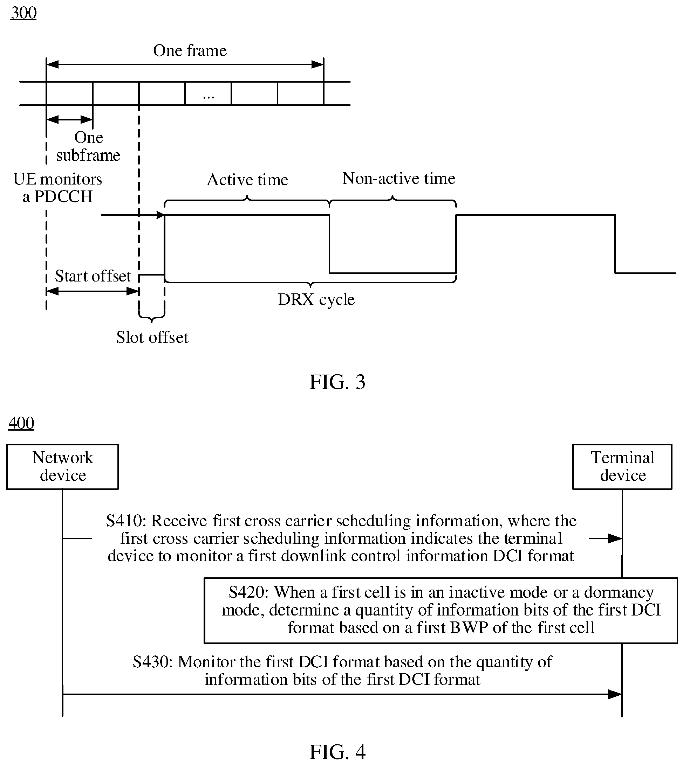

SFN is a system frame number, and modulo represents a modulo operation. A system frame may also be referred to as a radio frame. One radio frame is 10 ms, one radio frame may include a plurality of subframes (subframe), and each subframe includes one or more slots. As shown in FIG. 3, onDurationTimer is started after a start DRX subframe of the long DRX cycle is shifted by drx-SlotOffset, where non-active time corresponds to an opportunity for DRX.

If a short DRX cycle (short DRX cycle) is used, the terminal starts drx-onDurationTimer when a subframe number satisfies the following formula (2):

$$[(\text{SFN} \times 10) + \text{subframe number}] \bmod (\text{drx-ShortCycle}) = (\text{drx-StartOffset}) \bmod (\text{drx-ShortCycle}) \quad (2)$$

That is, onDurationTimer is started after a start subframe of the short DRX cycle is shifted by drx-SlotOffset.

Although not shown in the figure, in the C-DRX mechanism, the active time may further include: running time of drx-InactivityTimer (inactivity timer InactivityTimer for short), running time of drx-RetransmissionTimerDL (downlink retransmission timer RetransmissionTimerDL for short), and running time of drx-RetransmisionTimerUL (uplink retransmission timer RetransmisionTimerUL for short). C-DRX parameters configured by the network device for the terminal by using RRC signaling may be specifically shown in Table 1, including conditions for triggering drx-InactivityTimer, drx-RetransmissionTimerDL, and drx-RetransmisionTimerUL. That is, the three timers are started only when corresponding data is transmitted.

Table 1 Example of a C-DRX parameter table

| C-DRX parameter | Description |
|---|---|
| drx-SlotOffset | Indicates a time offset before drx-onDurationTimer is started. |
| drx-LongCycleStartOffset | Includes two parameters: drx-LongCycle and drx-StartOffset, where drx-LongCycle indicates duration of a long DRX cycle, and drx-StartOffset indicates start time of a DRX cycle. |
| drx-ShortCycle | Indicates duration of a short DRX cycle, where the short DRX cycle is an optional parameter, and switching between the long DRX cycle and the short DRX cycle can be performed. |
| drx-ShortCycleTimer | Indicates duration in which a terminal uses the short DRX cycle, where this parameter is an optional parameter. |
| drx-onDurationTimer | Indicates duration in which the DRX cycle starts, and a PDCCH is monitored within the duration of the timer. |

(continued)

| C-DRX parameter | Description |
|---|---|
| drx-InactivityTimer | When it is detected that the PDCCH indicates UL or DL initial transmission, the timer is started (or restarted), and the PDCCH continues to be monitored within duration of the timer, which may be understood as that drx-InactivityTimer prolongs active time of the DRX cycle. |
| drx-HARQ-RTT-TimerDL | Indicates minimum duration for which the terminal needs to wait before DL retransmission scheduling may be received, and each DL HARQ process corresponds to one timer. If it is detected that the PDCCH indicates downlink scheduling, the timer corresponding to the HARQ process is started after a HARQ feedback. |
| drx-HARQ-RTT-TimerUL | Indicates minimum duration for which the terminal needs to wait before UL retransmission scheduling may be received, and each UL HARQ process corresponds to one timer. If it is detected that the PDCCH indicates uplink scheduling, the timer corresponding to the HARQ process is started after a PUSCH. Specifically, when the PDCCH schedules a bundle of (a bundle of) PUSCHs, the terminal starts, on a $1^{st}$ symbol after a $1^{st}$ PUSCH end symbol or on a $1^{st}$ symbol after a slot of a $1^{st}$ PUSCH, the timer corresponding to the HARQ process. When the PDCCH does not schedule a bundle of PUSCHs, the terminal starts, on a $1^{st}$ symbol after an end symbol on which a PUSCH is sent or on a $1^{st}$ symbol after a slot in which a PUSCH is sent, the timer corresponding to the HARQ process. |
| drx-RetransmissionTimerDL | Indicates maximum duration for which the terminal expects to receive DL retransmission scheduling, and each DL HARQ process corresponds to one timer. If drx-HARQ-RTT-TimerDL expires and a PDSCH corresponding to a HARQ process is not correctly decoded, drx-RetransmissionTimerDL of the process is started. |
| drx-RetransmisionTimerUL | Indicates maximum duration for which the terminal expects to receive UL retransmission scheduling, and each UL HARQ process corresponds to one timer. If drx-HARQ-RTT-TimerUL expires, drx-RetransmissionTimerUL corresponding to a HARQ process is started. |

Active time may further include: a running period of ra-ContentionResolutionTimer (used for contention resolution in a random access procedure) or msgB-ResponseWindow (used for 2-step random access contention resolution); a waiting period after the terminal sends a scheduling request (scheduling request, SR) on a PUCCH; and a period in which the terminal has not received a PDCCH indicating new transmission after successfully receiving a random access response (random access response, RAR) to non-contention-based random access.

4. Cell activation and deactivation

The PCell does not support activation/deactivation, and the SCell supports activation/deactivation.
When the SCell is in an active mode, normal SCell operations are applied, and include:

(1) SRS transmission in the SCell;
(2) reporting of channel state information (channel state information, CSI) of the SCell;
(3) listening and monitoring of a physical downlink control channel (physical downlink control channel, PDCCH) of the SCell; and
(4) transmission (if configured) on a physical uplink control channel (physical uplink control channel, PUCCH) in the SCell.

When the SCell is in an inactive mode,

(1) no SRS is sent in the SCell;
(2) no CSI of the SCell is reported;
(3) no transmission is performed on an uplink shared channel (uplink shared channel, UL-SCH) in the SCell;
(4) no transmission is performed on a random access channel (random access channel, RACH) in the SCell;
(5) a physical downlink control channel (physical downlink control channel, PDCCH) in the SCell is not monitored; and
(6) no transmission is performed on a (physical uplink control channel, PUCCH) in the SCell.

For a cell, the network device may configure, by using an RRC information element firstActiveDownlinkBWP-Id, an identifier of a 1st active downlink BWP used when the terminal switches from an inactive mode to an active mode, and may also configure, by using an RRC information element firstActiveUplinkBWP-Id, an identifier of a 1st active uplink BWP used when the terminal switches from the inactive mode to the active mode. When the terminal enters the active mode from the inactive mode, a downlink BWP whose ID is firstActiveDownlinkBWP-Id and an uplink BWP whose ID is firstActiveUplinkBWP-Id in the cell are activated.

Configured SCell(s) may be activated and deactivated in the following manners:

(1) receiving an SCell activation/deactivation medium access control (medium access control, MAC) control element (control element, CE) sent by the network device;
(2) configuring a deactivation timer SCellDeactivationTimer for each configured SCell (except an SCell configured with a PUCCH), and deactivating an associated SCell when the timer expires; and
(3) configuring SCellState for each configured SCell: If configured, an associated SCell is activated during SCell configuration. Otherwise, an associated SCell is deactivated.

The terminal maintains a deactivation timer SCellDeactivationTimer for each SCell, and for all SCells corresponding to a terminal, values of SCellDeactivationTimer are the same. Further, the value may be configured as infinite "infinity", that is, timer-based SCell deactivation is disabled. In this case, the terminal cannot control SCell deactivation.

For an SCell, when the terminal does not receive data or a PDCCH message in the SCell within time specified by a deactivation timer, the SCell is to be deactivated. This is the only case in which the terminal can automatically deactivate an SCell.

5. Cross carrier scheduling

A cell in which DCI corresponding to a data channel is sent is referred to as a scheduling cell or a primary scheduling cell (scheduling cell), and a cell in which the data channel is sent is referred to as a scheduled cell (scheduled cell). If a data channel and DCI for scheduling the data channel are sent in a same cell, that is, the cell is both a scheduling cell and a scheduled cell, the cell is referred to as a self-scheduling (self-scheduling) cell. If a data channel and DCI for scheduling the data channel are sent in different cells, a cell for carrying the DCI is referred to as a scheduling cell, and a cell for carrying the data channel is referred to as a scheduled cell. This scheduling form is referred to as cross carrier scheduling (cross carrier scheduling, CCS). One scheduling cell may correspond to a plurality of scheduled cells, that is, one scheduling cell may be used to send DCI to schedule data of a plurality of scheduled cells.

6. Downlink control information

(1) Format of downlink control information

There are a plurality of DCI formats (DCI format) for DCI. DCI formats related to this application include DCI format 0_1, DCI format 0_2, DCI format 1_1, and DCI format 1_2. DCI formats 0_1 and 0_2 are used to schedule uplink data of the terminal, that is, schedule PUSCH transmission. DCI formats 1_1 and 1_2 are used to schedule downlink data of the terminal, that is, schedule PDSCH transmission.

In this application, unless otherwise specified, the DCI and the DCI format may be interchangeably used. For example, first DCI may alternatively be a first DCI format, and second DCI may alternatively be a second DCI format. For details about the DCI format, refer to section 7.3.1 in the 3GPP technical specification 38.212 V16.10.0.

The following Table 2 shows some DCI formats and usage thereof.

Table 2 Some DCI formats and usage thereof

| DCI format | Usage |
| --- | --- |
| 0_0 | PUSCH scheduling in one cell |
| 0_1 | PUSCH scheduling in one cell |
| 0_2 | PUSCH scheduling in one cell |
| 1_0 | PDSCH scheduling in one cell |
| 1_1 | PDSCH scheduling in one cell |
| 1_2 | PDSCH scheduling in one cell |
| 2_0 | Indicates a slot format of a group of terminals |

(continued)

| DCI format | Usage |
|---|---|
| 2_1 | Used to notify a group of terminals that no signal is transmitted on a PRB and an OFDM symbol that are indicated |
| 2_2 | Used to transmit a power control command for a PUCCH and a PUSCH |
| 2_3 | Used to transmit a group of power control commands for sending an SRS by one or more terminals |

Currently, two new DCI formats are discussed in a standard, as shown in the following Table 3.

Table 3 Two new DCI formats and usage thereof

| DCI format | Usage |
|---|---|
| 0_X | PUSCH scheduling in one or more cells |
| 1_X | PDSCH scheduling in one or more cells |

(2) Size of downlink control information

There are two understandings of the size of the downlink control information (DCI size): including only a size of an information bit (bit) in the DCI, and including a size of an information bit in the DCI and a size of a cyclic redundancy check (cyclic redundancy check, CRC). The size of the information bit in the DCI is also referred to as a payload (payload) size. In an NR system, a bit width of the CRC is 24. Therefore, if sizes of information bits are the same, sizes of information bits plus CRC bits are the same.

When DCI sizes are different, the terminal may use different receiving manners. To reduce receiving complexity of the terminal, a quantity of DCI sizes is usually reduced in a DCI size alignment manner. If DCI sizes of two DCI formats are different, DCI sizes need to be aligned. In a general manner, 0 is added behind information bits of a DCI format with a shorter DCI size, which is also referred to as bit padding, or bit truncation is performed on information bits of a DCI format with a longer DCI size, until payload sizes of the two DCI formats are the same, or DCI sizes are the same.

(3) Content of downlink control information

① Carrier indicator field

A carrier indicator field (carrier indicator field, CIF) is present in DCI format 0_1/0_2/1_1/1_2. When cross carrier scheduling is present between cells, and a plurality of scheduled cells can be scheduled, DCI carried on a PDCCH sent by a scheduling cell may include a CIF. Higher layer signaling is used to configure different CIF values for different scheduled cells (scheduled cell). After receiving one piece of DCI, the terminal may determine, based on a CIF value, a specific scheduled cell to be scheduled by using the DCI.

A carrier indicator field in DCI format 0_1/1_1 is 0 or 3 bits, and a configuration parameter cif-Presence for a scheduling cell (scheduling cell) indicates whether a CIF field is present. A carrier indicator field in DCI format 0_2/1_2 is 0, 1, 2, or 3 bits, and the network device configures carrierIndicatorSizeDCI-0-2 and carrierIndicatorSizeDCI-1-2. The two parameters are used to define a quantity of bits in the carrier indicator field of DCI format 0_2/1_2.

② BWP indicator field

There is a BWP indicator field in DCI format 0_1/0_2/1_1/1_2. The BWP indicator field occupies 0, 1, or 2 bits, and a bit width occupied for the BWP indicator field is $[\log_2(N_{BWP})]$ bits. In DCI format 0_1/1_1/, $N_{BWP,RRC}$ is a quantity of uplink BWPs that are configured by a higher layer and that do not include an initial uplink BWP, and in DCI format 0_2/1_2/, $N_{BWP,RRC}$ is a quantity of downlink BWPs that are configured by the higher layer and that do not include an initial downlink BWP.

If $N_{BWP,RRC} \leq 3$, $N_{BWP} = N_{BWP,RRC} + 1$. In this case, the BWP indicator field is equivalent to an ascending order of higher-layer parameter BWP-Ids. Otherwise, $N_{BWP} = N_{BWP,RRC}$. In this case, a definition of the BWP indicator field is shown in Table 4.

Table 4 Example of a definition of a BWP indicator field when $N_{BWP}=N_{BWP,RRC}$

| Value of BWP indicator field | Bandwidth part |
|---|---|
| 2 bits | |
| 00 | Configured BWP with BWP-Id = 1 |
| 01 | Configured BWP with BWP-Id = 2 |
| 10 | Configured BWP with BWP-Id = 3 |
| 11 | Configured BWP with BWP-Id = 4 |

If the terminal does not support active BWP switching performed by using DCI, the terminal ignores this bit field.

③ Field related to a scheduled cell

In DCI, some fields are related to the scheduled cell. Particularly, some fields in DCI for scheduling uplink transmission may be related to a configuration of an active uplink BWP, and some fields in DCI for scheduling downlink transmission may be related to a configuration of an active downlink BWP. For example, a frequency domain resource indicator (Frequency domain resource assignment) field: A size and content of the field in the DCI for scheduling uplink transmission are related to a configuration (a bandwidth and a center frequency offset) of an active uplink BWP of a scheduled cell; and a size and content of the field in the DCI for scheduling downlink transmission are related to a configuration (a bandwidth and a center frequency offset) of an active downlink BWP of a scheduled cell.

Particularly, some fields in the DCI for scheduling downlink transmission may be related to a configuration of an active uplink BWP. For example, in a physical uplink control channel resource indicator (PUCCH resource indicator) field, a quantity of bits of the field may be related to a parameter numberOfBitsForPUCCH-ResourceIndicatorDCI-1-2 in the configuration of the active uplink BWP. For example, in a physical downlink shared channel to hybrid automatic repeat request timing indicator (PDSCH-to-HARQ_feedback timing indicator) field, a quantity of bits of the field may be related to a parameter DL-DataToUL-ACK-DCI-1-2 in the configuration of the active uplink BWP. In particular, some fields in the DCI for scheduling uplink transmission may be related to a configuration of an active downlink BWP. For example, in a PUCCH resource indicator field, a quantity of bits of the field may be related to a parameter numberOfBitsForPUCCH-ResourceIndicatorDCI-1-2 in the configuration of the active uplink BWP. For another example, in a DSCH-to-HARQ_feedback timing indicator field, a quantity of bits of the field may be related to a parameter DL-DataToUL-ACK-DCI-1-2 in the configuration of the active uplink BWP.

④ Fields in DCI formats (format) 0_X and 1_X

For DCI format 0_X/1_X that can be used to schedule a plurality of cells, when the cells that can be scheduled by using one DCI format 0_X or 1_X include a first cell, bit widths of some DCI fields may be related to a BWP configuration of the first cell. DCI format 1_X is related to a downlink target BWP configuration of the first cell, and DCI format 0_X is related to an uplink target BWP configuration of the first cell, and may include: a DCI field that separately indicates, in a joint indication manner, information to each cell in all scheduled cells, a DCI field that indicates information only to the first cell, or a DCI field that indicates information to a cell group including the first cell, where the cell group herein is a subset of the cells that can be scheduled by using one DCI format 0_X or 1_X.

Specifically, the following may be included:

(a) a new data indicator per TB (New data indicator per TB);
(b) a redundancy version per TB (Redundancy version per TB)
(c) precoding information and a quantity of layers (Precoding information and number of layers), where for DCI format 0_X, a bit width is determined based on a txConfig configuration in an uplink target BWP of the first cell;
(d) phase tracking reference signal-demodulation reference signal association (PTRS-DMRS association), where for DCI format 0_X, if PTRS-UplinkConfig is not configured in the uplink target BWP of the first cell, this field is 0 bits; or if PTRS-UplinkConfig is configured in the uplink target BWP of the first cell, this field is 2 bits;
(e) an antenna port (Antenna port(s));
(f) a sounding reference signal indication (sounding reference signal indication, SRI); and
(g) a physical resource block bundling size indicator (PRB bundling size indicator), where for DCI format 1_X, a bit width is determined if prb-BundlingType is configured in a downlink target BWP of the first cell. The target BWP has the first BWP ID of the first cell that needs to be determined in this application.

In a previous protocol, one piece of DCI is used to schedule only one scheduled cell. When the scheduled cell is deactivated, a network side device does not need to send DCI for scheduling the scheduled cell. Therefore, there is no problem of setting a BWP indicator field in the DCI for scheduling the deactivated cell. Therefore, in an existing protocol, a BWP, namely, a BWP ID does not need to be configured for the inactive mode. However, if one piece of DCI needs to be used to schedule a plurality of cells, to reduce overheads of the carrier indicator field, the carrier indicator field may not indicate all cell combinations. Therefore, for the two new DCI formats shown in Table 3, the CIF field needs to be reset. For example, as shown in the following Table 5, it may be set that two bits indicate four carrier combinations.

Table 5 Example of indicating four carrier combinations by using 2 bits

| CIF/nCI value | CC(s) |
|---|---|
| 0 (00) | 0, 1 |
| 1 (01) | 2, 3 |
| 2 (10) | 0, 2 |
| 3 (11) | 0, 1, 2, 3 |

In a case of the example of Table 5, if a carrier 3 is set to be deactivated, when the network device needs to simultaneously schedule CC0, CC1, and CC2, the CIF in the DCI is set to 3, that is, 11. In this case, how to set a BWP ID of the carrier 3 and set another dedicated field corresponding to the carrier 3 is an urgent problem to be resolved.

Therefore, when one piece of DCI is used to schedule a plurality of scheduled cells, and a cell in an inactive mode/dormancy mode is present in the scheduled cells, how to set BWP IDs and corresponding specific indicator fields of these scheduled cells becomes an urgent problem to be resolved.

Based on this, this application provides a downlink control information transmission method and an apparatus, to accurately determine a DCI format and improve information transmission performance.

The following describes the technical solutions of this application in detail by using interaction between a terminal and a network device as an example. The terminal may be the terminal (for example, the terminal device 102, the terminal device 103, or the terminal device 104) in FIG. 1, and the network device may be the network device 101 in FIG. 1.

FIG. 4 is a schematic flowchart of an example of a downlink control information transmission method according to this application.

S410: A terminal receives first cross carrier scheduling configuration information, where the first cross carrier scheduling configuration information indicates the terminal to monitor a first downlink control information DCI format.

Correspondingly, a network device sends the first cross carrier scheduling configuration information.

Optionally, the first DCI format can be used to simultaneously schedule data transmission of two or more cells.

Optionally, the first DCI format can be used to simultaneously schedule uplink data transmission and/or downlink data transmission of two or more cells. For example, the first DCI format can be used to simultaneously schedule downlink data channels of two or more cells, that is, simultaneously schedule at least one downlink data channel in each of the two or more cells. For example, the first DCI format can be used to simultaneously schedule uplink data channels of two or more cells, that is, simultaneously schedule at least one uplink data channel in each of the two or more cells. For example, the first DCI format can be used to simultaneously schedule uplink data channels and/or downlink data channels of two or more cells, that is, simultaneously schedule at least one data channel in each of the two or more cells, which may be an uplink data channel or a downlink data channel.

S420: When a first cell is in an inactive mode or a dormancy mode, determine a quantity of information bits of the first DCI format based on a first BWP of the first cell.

The first cell may be one of the two or more cells, or may not be any one of the two or more cells. A first indicator field in the first DCI format indicates a scheduled cell or a scheduled cell group scheduled in the first DCI format. The scheduled cell group means two or more scheduled cells. Different values of the first indicator field in the first DCI format can indicate different scheduled cells or scheduled cell groups. Optionally, a value of the first indicator field indicates a scheduling cell group, and another value indicates a scheduled cell. Optionally, a value of the first indicator field indicates a first scheduled cell group, another value indicates a second scheduled cell group, and the first scheduled cell group is different from the second scheduled cell group. The first cell may be a cell in a scheduled cell group indicated by a value of the first indicator field, or may be a scheduled cell indicated by a value of the first indicator field. Optionally, the first cross carrier scheduling configuration information further indicates the terminal to monitor the first DCI format in a second cell. The first cell is different from the second cell. The first indicator field may be a carrier indicator field or a carrier group indicator field. The quantity of information bits of the first DCI format is determined based on the first BWP of the first cell may also be understood as that quantities of bits of some DCI fields (field) in the first DCI format are determined based on a configuration of the first BWP, to determine the quantity of information bits of the first DCI format. The DCI field, in the first DCI format, whose quantity of bits is determined based on the configuration of the first BWP is referred to as a specific indicator field corresponding to the first cell. In this application, the specific indicator field corresponding to the first cell includes but is not limited to a DCI field, in the first DCI format, that separately indicates, in a joint indication manner, information to each cell in a cell group including the first cell, a DCI field that indicates information only to the first cell, or a DCI field that indicates information to a cell group including the first cell, and a BWP ID field of each cell. In this application, the quantity of information bits of the first DCI format may alternatively be a DCI size (DCI size) of the first DCI format, or may alternatively be a payload (payload) size of the first DCI format, or may alternatively be a sum of the quantity of information bits and a quantity of CRC bits of the first DCI format, or may alternatively be a sum of a payload (payload) size and a CRC size of the first DCI format.

Optionally, the first BWP is a last non-dormant active uplink BWP used before the first cell is in a current inactive mode or dormancy mode; a last non-dormant active downlink BWP used before the first cell is in the current inactive mode or dormancy mode; a 1st active uplink BWP that is configured for the first cell and that is used when the first cell is switched from the inactive mode to an active mode; a 1st active downlink BWP that is configured for the first cell and that is used when the first cell is switched from the inactive mode to the active mode; a 1st corresponding non-dormant BWP of the first cell within active time; a 1st corresponding non-dormant BWP of the first cell outside active time; an uplink BWP whose identifier ID is the same as an identifier ID of the 1st corresponding non-dormant BWP of the first cell within active time; an uplink BWP whose ID is the same as an ID of the 1st corresponding non-dormant BWP of the first cell outside active time; or a current active uplink BWP.

In this embodiment of this application, the first DCI format can be used to simultaneously schedule downlink data transmission of two or more cells. When the first cell is in the inactive mode, there may be the following several cases of the first BWP.

In a first possible case, the first BWP is the last non-dormant active downlink BWP used before the first cell is in the current inactive mode. In this way, when the first cell is switched from the active mode to the inactive mode, the quantity of information bits of the first DCI format is not changed. In other words, a case in which the quantity of information bits of the first DCI format is changed because the first cell is switched from the active mode to the inactive mode does not occur. Therefore, implementation complexity of UE can be reduced.

In a second possible case, when the 1st active downlink BWP that is configured for the first cell and that is used when the first cell is switched from the inactive mode to the active mode is a non-dormant BWP, the first BWP is the 1st active downlink BWP that is configured for the first cell and that is used when the first cell is switched from the inactive mode to the active mode. In this way, when the first cell is switched from the current inactive mode to the active mode, the quantity of information bits of the first DCI format is not changed. In other words, a case in which the quantity of information bits of the first DCI format is changed because the first cell is switched from the inactive mode to the active mode in the future does not occur. Therefore, implementation complexity of UE can be reduced.

In a third possible case, when the 1st active downlink BWP that is configured for the first cell and that is used when the first cell is switched from the inactive mode to the active mode is a dormant BWP, and the 1st corresponding non-dormant BWP within active time is preconfigured for the first cell, the first BWP is the 1st corresponding non-dormant BWP within active time. In this way, the first BWP is determined based on a higher layer configuration, and implementation is simple.

In a fourth possible case, when the 1st active downlink BWP that is configured for the first cell and that is used when the first cell is switched from the inactive mode to the active mode is a dormant BWP, and the 1st corresponding non-dormant BWP within active time is not preconfigured for the first cell, the first BWP is the 1st corresponding non-dormant BWP outside active time. In this way, the first BWP is determined based on a higher layer configuration, and implementation is simple.

In a fifth possible case, when the 1st active downlink BWP that is configured for the first cell and that is used when the first cell is switched from the inactive mode to the active mode is a dormant BWP, and the 1st corresponding non-dormant BWP outside active time is preconfigured for the first cell, the first BWP is the 1st corresponding non-dormant BWP outside active time. In this way, the first BWP is determined based on a higher layer configuration, and implementation is simple.

In a sixth possible case, when the 1st active downlink BWP that is configured for the first cell and that is used when the first cell is switched from the inactive mode to the active mode is a dormant BWP, and the 1st corresponding non-dormant BWP outside active time is not preconfigured for the first cell, the first BWP is the 1st corresponding non-dormant BWP within active time. In this way, the first BWP is determined based on a higher layer configuration, and implementation is simple.

In this embodiment of this application, the first DCI format can be used to simultaneously schedule uplink data transmission of two or more cells. When the first cell is in the inactive mode, there may be the following several cases of the first BWP.

In a first possible case, the first BWP is the last non-dormant active uplink BWP used before the first cell is in the current inactive mode. In this way, when the first cell is switched from the active mode to the inactive mode, the quantity of information bits of the first DCI format is not changed. In other words, a case in which the quantity of information bits of the first DCI format is changed because the first cell is switched from the active mode to the inactive mode does not occur. Therefore, implementation complexity of UE can be reduced.

In a second possible case, the first BWP is the 1st active uplink BWP that is configured for the first cell and that is used when the first cell is switched from the inactive mode to the active mode. In this way, when the first cell is switched from the current inactive mode to the active mode, the quantity of information bits of the first DCI format is not changed. In other words, a case in which the quantity of information bits of the first DCI format is changed because the first cell is switched from the inactive mode to the active mode in the future does not occur. Therefore, implementation complexity of UE can be reduced.

In a third possible case, when the 1st active downlink BWP that is configured for the first cell and that is used when the first cell is switched from the inactive mode to the active mode is a dormant BWP, and the 1st corresponding non-dormant BWP within active time is preconfigured for the first cell, the first BWP is the uplink BWP whose ID is the same as the ID of the 1st corresponding non-dormant BWP of the first cell within active time. Further, this solution may be applied when the first cell operates in a time division duplex TDD mode. In this way, the first BWP is determined based on a higher layer configuration, and implementation is simple.

In a fourth possible case, when the 1st active downlink BWP that is configured for the first cell and that is used when the first cell is switched from the inactive mode to the active mode is a dormant BWP, and the 1st corresponding non-dormant BWP outside active time is not preconfigured for the first cell, the first BWP is the uplink BWP whose ID is the same as the ID of the 1st corresponding non-dormant BWP of the first cell outside active time. Further, this solution may be applied when the first cell operates in a time division duplex TDD mode. In this way, the first BWP is determined based on a higher layer configuration, and implementation is simple.

In this embodiment of this application, the first DCI format can be used to simultaneously schedule downlink data transmission of two or more cells. When the first cell is in the dormancy mode, there may be the following several cases of the first BWP.

In a first possible case, the first BWP is the last non-dormant active downlink BWP used before the first cell is in the current dormancy mode. In this way, when the first cell is switched from a non-dormancy mode to the dormancy mode, the quantity of information bits of the first DCI format is not changed. In other words, a case in which the quantity of information bits of the first DCI format is changed because the first cell is switched from the non-dormancy mode to the dormancy mode does not occur. Therefore, implementation complexity of UE can be reduced.

In a second possible case, when the 1st corresponding non-dormant BWP within active time is preconfigured for the first cell, the first BWP is the 1st corresponding non-dormant BWP within active time. In this way, the first BWP is determined based on a higher layer configuration, and implementation is simple.

In a third possible case, when the 1st corresponding non-dormant BWP within active time is not preconfigured for the first cell, the first BWP is the 1st corresponding non-dormant BWP outside active time. In this way, the first BWP is determined based on a higher layer configuration, and implementation is simple.

In a fourth possible case, when the 1st corresponding non-dormant BWP outside active time is preconfigured for the first cell, the first BWP is the 1st corresponding non-dormant BWP outside active time. In this way, the first BWP is determined based on a higher layer configuration, and implementation is simple.

In a fifth possible case, when the 1st corresponding non-dormant BWP outside active time is not preconfigured for the first cell, the first BWP is the 1st corresponding non-dormant BWP within active time. In this way, the first BWP is determined based on a higher layer configuration, and implementation is simple.

In a sixth possible case, when a dormancy indication indicating that the first cell enters the dormancy mode is received within active time, the first BWP is the 1st corresponding non-dormant BWP within active time. In this way, the network device may control the quantity of information bits of the first DCI format based on time at which the dormancy indication is sent.

In a seventh possible case, when a dormancy indication indicating that the first cell enters the dormancy mode is received outside active time, the first BWP is the 1st corresponding non-dormant BWP outside active time. In this way, the network device may control the quantity of information bits of the first DCI format based on time at which the dormancy indication is sent.

In an eighth possible case, when a dormancy indication indicating that the first cell enters the dormancy mode is carried in a DCI format being DCI format 0_1 or DCI format 1_1, the first BWP is the 1st corresponding non-dormant BWP within active time. In this way, the network device may control the quantity of information bits of the first DCI format based on the DCI format for sending the dormancy indication.

In a ninth possible case, when a dormancy indication indicating that the first cell enters the dormancy mode is carried in a DCI format being DCI format 2_6, the first BWP is the 1st corresponding non-dormant BWP outside active time. In this way, the network device may control the quantity of information bits of the first DCI format based on the DCI format for sending the dormancy indication

In this embodiment of this application, the first DCI format can be used to simultaneously schedule uplink data transmission of two or more cells. When the first cell is in the dormancy mode, there may be the following several cases of the first BWP.

In a first possible case, the first BWP is the last non-dormant active uplink BWP used before the first cell is in the current dormancy mode. In this way, when the first cell is switched from a non-dormancy mode to the dormancy mode, the quantity of information bits of the first DCI format is not changed. In other words, a case in which the quantity of information bits of the first DCI format is changed because the first cell is switched from the non-dormancy mode to the dormancy mode does not occur. Therefore, implementation complexity of UE can be reduced.

In a second possible case, the first BWP is the current active uplink BWP. Further, this solution may be applied when the first cell operates in a frequency division duplex FDD mode. In the FDD mode, active uplink BWP switching and active downlink BWP switching are independent.

In a third possible case, when the 1st corresponding non-dormant BWP within active time is preconfigured for the first cell, the first BWP is the uplink BWP whose ID is the same as the ID of the 1st corresponding non-dormant BWP of the first cell within active time. In this way, the first BWP is determined based on a higher layer configuration, and implementation is simple.

In a fourth possible case, when the 1st corresponding non-dormant BWP within active time is not preconfigured for the first cell, the first BWP is the uplink BWP whose ID is the same as the ID of the 1st corresponding non-dormant BWP of the first cell outside active time. In this way, the first BWP is determined based on a higher layer configuration, and implementation is simple.

In a fifth possible case, when the 1st corresponding non-dormant BWP outside active time is preconfigured for the first cell, the first BWP is the uplink BWP whose ID is the same as the ID of the 1st corresponding non-dormant BWP of the first cell outside active time. In this way, the first BWP is determined based on a higher layer configuration, and implementation is simple.

In a sixth possible case, when the 1st corresponding non-dormant BWP outside active time is not preconfigured for the first cell, the first BWP is the uplink BWP whose ID is the same as the ID of the 1st corresponding non-dormant BWP of the first cell within active time. In this way, the first BWP is determined based on a higher layer configuration, and implementation is simple.

In a seventh possible case, when a dormancy indication indicating that the first cell enters the dormancy mode is received within active time, the first BWP is the uplink BWP whose ID is the same as the ID of the 1st corresponding non-dormant BWP of the first cell within active time. In this way, the network device may control the quantity of information bits of the first DCI format based on time at which the dormancy indication is sent. In this way, the network device may control the quantity of information bits of the first DCI format based on time at which the dormancy indication is sent.

In an eighth possible case, when a dormancy indication indicating that the first cell enters the dormancy mode is received outside active time, the first BWP is the uplink BWP whose ID is the same as the ID of the 1st corresponding non-dormant BWP of the first cell outside active time. In this way, the network device may control the quantity of information bits of the first DCI format based on time at which the dormancy indication is sent. In this way, the network device may control the quantity of information bits of the first DCI format based on time at which the dormancy indication is sent.

In a ninth possible case, when a dormancy indication indicating that the first cell enters the dormancy mode is carried in a DCI format being DCI format 0_1 or DCI format 1_1, the first BWP is the uplink BWP whose ID is the same as the ID of the 1st corresponding non-dormant BWP of the first cell within active time. In this way, the network device may control the quantity of information bits of the first DCI format based on the DCI format for sending the dormancy indication

In a tenth possible case, when a dormancy indication indicating that the first cell enters the dormancy mode is carried in a DCI format being DCI format 2_6, the first BWP is the uplink BWP whose ID is the same as the ID of the 1st corresponding non-dormant BWP of the first cell outside active time. In this way, the network device may control the quantity of information bits of the first DCI format based on the DCI format for sending the dormancy indication

In this specification, a non-dormant active uplink BWP of the first cell is an active uplink BWP used when the first cell is in the active mode and a non-dormancy mode, or an active uplink BWP used when the first cell is in the active mode.

Optionally, the determining a quantity of information bits of the first DCI format based on a first BWP of the first cell may further include: determining the quantity of information bits of the first DCI format based on the first BWP and a third BWP of the first cell. The first BWP is a last non-dormant active downlink BWP used before the first cell is in the current inactive mode or dormancy mode; a 1st active downlink BWP that is configured for the first cell and that is used when the first cell is switched from the inactive mode to an active mode; a 1st corresponding non-dormant BWP of the first cell within active time; or a 1st corresponding non-dormant BWP of the first cell outside active time. The third BWP is one of a last non-dormant active uplink BWP used before the first cell is in the current inactive mode or dormancy mode; a 1st active uplink BWP that is configured for the first cell and that is used when the first cell is switched from the inactive mode to the active mode; an uplink BWP whose identifier ID is the same as an ID of the 1st corresponding non-dormant BWP of the first cell within active time; an uplink BWP whose ID is the same as an ID of the 1st corresponding non-dormant BWP of the first cell outside active time; or a current active uplink BWP.

In this embodiment of this application, when the first cell is in the inactive mode, there may be the following several cases of the first BWP and the third BWP.

In a first possible case, the first BWP is the last non-dormant active downlink BWP used before the first cell is in the current inactive mode, and the third BWP is the last non-dormant active uplink BWP used before the first cell is in the current inactive mode. In this way, when the first cell is switched from the active mode to the inactive mode, the quantity of information bits of the first DCI format is not changed. In other words, a case in which the quantity of information bits of the first DCI format is changed because the first cell is switched from the active mode to the inactive mode does not occur. Therefore, implementation complexity of UE can be reduced.

In a second possible case, when the 1st active downlink BWP that is configured for the first cell and that is used when the first cell is switched from the inactive mode to the active mode is a non-dormant BWP, the first BWP is the 1st active downlink BWP that is configured for the first cell and that is used when the first cell is switched from the inactive mode to the active mode, and the third BWP is the 1st active uplink BWP that is configured for the first cell and that is used when the first cell is switched from the inactive mode to the active mode. In this way, when the first cell is switched from the current inactive mode to the active mode, the quantity of information bits of the first DCI format is not changed. In other words, a case in which the quantity of information bits of the first DCI format is changed because the first cell is switched from the inactive mode to the active mode in the future does not occur. Therefore, implementation complexity of UE can be reduced.

In a third possible case, when the 1st active downlink BWP that is configured for the first cell and that is used when the first cell is switched from the inactive mode to the active mode is a dormant BWP, and the 1st corresponding non-dormant BWP within active time is preconfigured for the first cell, the first BWP is the 1st corresponding non-dormant BWP within active time, and the third BWP is the 1st active uplink BWP that is configured for the first cell and that is used when the first cell is switched from the inactive mode to the active mode.

In addition, if the 1st active downlink BWP that is configured for the first cell and that is used when the first cell is switched from the inactive mode to the active mode is the dormant BWP, the quantity of information bits of the first DCI format cannot be determined based on the 1st active downlink BWP that is configured for the first cell and that is used when the first cell is switched from the inactive mode to the active mode. Therefore, in this case, at least one of the 1st corresponding non-dormant BWP within active time and the 1st corresponding non-dormant BWP outside active time is definitely configured for the first cell. Therefore, in a fourth possible case, when the 1st corresponding non-dormant BWP within active time is preconfigured for the first cell, the first BWP is the 1st corresponding non-dormant BWP within active time. In this way, implementation is simple. Alternatively, it may alternatively be the following: When the 1st active downlink BWP that is configured for the first cell and that is used when the first cell is switched from the inactive mode to the active mode is a dormant BWP, and the 1st corresponding non-dormant BWP outside active time is preconfigured for the first cell, the first BWP is the 1st corresponding non-dormant BWP outside active time. Because only the downlink BWP can be configured as a dormant BWP, when the active downlink BWP is a dormant BWP, the active uplink BWP is not a dormant BWP. Therefore, when the first cell is in the inactive mode, and the 1st active downlink BWP that is configured for the first cell and that is used when the first cell is switched from the inactive mode to the active mode is the dormant BWP, the third BWP is the 1st active uplink BWP that is configured for the first cell and that is used when the first cell is switched from the inactive mode to the active mode. Further, this solution may be applied when the first cell operates in a frequency division duplex FDD mode, because in the FDD mode, active uplink BWP switching and active downlink BWP switching are independent.

In a fifth possible case, when the 1st active downlink BWP that is configured for the first cell and that is used when the first cell is switched from the inactive mode to the active mode is a dormant BWP, and the 1st corresponding non-dormant BWP within active time is not preconfigured for the first cell, the first BWP is the 1st corresponding non-dormant BWP outside active time, and the third BWP is the 1st active uplink BWP that is configured for the first cell and that is used when the first cell is switched from the inactive mode to the active mode.

If the 1st active downlink BWP that is configured for the first cell and that is used when the first cell is switched from the inactive mode to the active mode is the dormant BWP, the quantity of information bits of the first DCI format cannot be determined based on the 1st active downlink BWP that is configured for the first cell and that is used when the first cell is switched from the inactive mode to the active mode. In this case, at least one of the 1st corresponding non-dormant BWP within active time and the 1st corresponding non-dormant BWP outside active time is definitely configured for the first cell. Therefore, in a sixth possible case, when the 1st corresponding non-dormant BWP within active time is not preconfigured for the first cell, that is, the 1st corresponding non-dormant BWP outside active time is preconfigured for the first cell, the first BWP is the 1st corresponding non-dormant BWP outside active time. In this way, implementation is simple. Alternatively, it may alternatively be the following: When the 1st active downlink BWP that is configured for the first cell and that is used when the first cell is switched from the inactive mode to the active mode is a dormant BWP, and the 1st corresponding non-dormant BWP outside active time is not preconfigured for the first cell, the first BWP is the 1st corresponding non-dormant BWP within active time. In addition, because only the downlink BWP can be configured as a dormant BWP, when the active downlink BWP is a dormant BWP, the active uplink BWP is not a dormant BWP. Therefore, when the first cell is in the inactive mode, and the 1st active downlink BWP that is configured for the first cell and that is used when the first cell is switched from the inactive mode to the active mode is the dormant BWP, the third BWP is the 1st active uplink BWP that is configured for the first cell and that is used when the first cell is switched from the inactive mode to the active mode. Further, this solution may be applied when the first cell operates in a frequency division duplex FDD mode, because in the FDD mode, active uplink BWP switching and active downlink BWP switching are independent.

In a seventh possible case, when the 1st active downlink BWP that is configured for the first cell and that is used when the first cell is switched from the inactive mode to the active mode is a dormant BWP, and the 1st corresponding non-dormant BWP within active time is preconfigured for the first cell, the first BWP is the 1st corresponding non-dormant BWP within active time, and the third BWP is the uplink BWP whose ID is the same as the ID of the 1st corresponding non-dormant BWP of the first cell within active time.

If the 1st active downlink BWP that is configured for the first cell and that is used when the first cell is switched from the inactive mode to the active mode is the dormant BWP, the quantity of information bits of the first DCI format cannot be determined based on the 1st active downlink BWP that is configured for the first cell and that is used when the first cell is switched from the inactive mode to the active mode. In this case, at least one of the 1st corresponding non-dormant BWP within active time and the 1st corresponding non-dormant BWP outside active time is definitely configured for the first cell. Therefore, in an eighth possible case, when the 1st corresponding non-dormant BWP within active time is preconfigured for the first cell, the first BWP is the 1st corresponding non-dormant BWP within active time. In this way, implementation is simple. Similarly, alternatively, it may alternatively be the following: When the 1st active downlink BWP that is configured for the first cell and that is used when the first cell is switched from the inactive mode to the active mode is a dormant BWP, and the 1st corresponding non-dormant BWP outside active time is preconfigured for the first cell, the first BWP is the 1st corresponding non-dormant BWP outside active time. Because only the downlink BWP can be configured as a dormant BWP, when the active downlink BWP is a dormant BWP, the active uplink BWP is not a dormant BWP. Therefore, when the first cell is in the inactive mode, and the 1st active downlink BWP that is configured for the first cell and that is used when the first cell is switched from the inactive mode to the active mode is the dormant BWP, the third BWP is the uplink BWP whose ID is the same as the ID of the 1st corresponding non-dormant BWP of the first cell within active time. Alternatively, it may alternatively be the following: When the 1st active downlink BWP that is configured for the first cell and that is used when the first cell is switched from the inactive mode to the active mode is a dormant BWP, and the 1st corresponding non-dormant BWP outside active time is preconfigured for the first cell, the third BWP is the uplink BWP whose ID is the same as the ID of the 1st corresponding non-dormant BWP of the first cell outside active time. Further, this solution may be applied when the first cell operates in a time division duplex TDD mode, because in the TDD mode, active uplink BWP switching and active downlink BWP switching are bound, and BWP IDs are the same.

In a ninth possible case, when the 1st active downlink BWP that is configured for the first cell and that is used when the first cell is switched from the inactive mode to the active mode is a dormant BWP, and the 1st corresponding non-dormant BWP within active time is not preconfigured for the first cell, the first BWP is the 1st corresponding non-dormant BWP outside active time, and the third BWP is the uplink BWP whose ID is the same as the ID of the 1st corresponding non-dormant BWP of the first cell within active time.

If the 1st active downlink BWP that is configured for the first cell and that is used when the first cell is switched from the inactive mode to the active mode is the dormant BWP, the quantity of information bits of the first DCI format cannot be determined based on the 1st active downlink BWP that is configured for the first cell and that is used when the first cell is switched from the inactive mode to the active mode. In this case, at least one of the 1st corresponding non-dormant BWP within active time and the 1st corresponding non-dormant BWP outside active time is definitely configured for the first cell. Therefore, in a tenth possible case, when the 1st corresponding non-dormant BWP within active time is not preconfigured for the first cell, that is, the 1st corresponding non-dormant BWP outside active time is preconfigured for the first cell, the first BWP is the 1st corresponding non-dormant BWP outside active time. In this way, implementation is simple. Alternatively, it may alternatively be the following: When the 1st active downlink BWP that is configured for the first cell and that is used when the first cell is switched from the inactive mode to the active mode is a dormant BWP, and the 1st corresponding non-dormant BWP outside active time is not preconfigured for the first cell, the first BWP is the 1st corresponding non-dormant BWP within active time. Because only the downlink BWP can be configured as a dormant BWP, when the active downlink BWP is a dormant BWP, the active uplink BWP is not a dormant BWP. Therefore, when the first cell is in the inactive mode, and the 1st active downlink BWP that is configured for the first cell and that is used when the first cell is switched from the inactive mode to the active mode is the dormant BWP, the third BWP is the uplink BWP whose ID is the same as the ID of the 1st corresponding non-dormant BWP of the first cell within active time. Alternatively, it may alternatively be the following: When the 1st active downlink BWP that is configured for the first cell and that is used when the first cell is switched from the inactive mode to the active mode is a dormant BWP, and the 1st corresponding non-dormant BWP outside active time is preconfigured for the first cell, the third BWP is the uplink BWP whose ID is the same as the ID of the 1st corresponding non-dormant BWP of the first cell outside active time. Further, this solution may be applied when the first cell operates in a time division duplex TDD mode, because in the TDD mode, active uplink BWP switching and active downlink BWP switching are bound, and BWP IDs are the same.

In this embodiment of this application, when the first cell is in the dormancy mode, there may be the following several cases of the first BWP and the third BWP.

In a first possible case, the first BWP is the last non-dormant active downlink BWP used before the first cell is in the current dormancy mode, and the third BWP is the last non-dormant active uplink BWP used before the first cell is in the current dormancy mode. In this way, when the first cell is switched from a non-dormancy mode to the dormancy mode, the quantity of information bits of the first DCI format is not changed. In other words, a case in which the quantity of information bits of the first DCI format is changed because the first cell is switched from the non-dormancy mode to the dormancy mode does not occur. Therefore, implementation complexity of UE can be reduced.

In a second possible case, when the 1st corresponding non-dormant BWP within active time is preconfigured for the first cell, the first BWP is the 1st corresponding non-dormant BWP within active time, and the third BWP is the current active uplink BWP.

Because the first cell is in the dormancy mode, and at least one of the 1st corresponding non-dormant BWP within active time and the 1st corresponding non-dormant BWP outside active time is definitely configured for the first cell, when the 1st corresponding non-dormant BWP within active time is preconfigured for the first cell, the first BWP is the 1st corresponding non-dormant BWP within active time. In this way, implementation is simple. Similarly, alternatively, it may alternatively be the following: When the 1st corresponding non-dormant BWP outside active time is preconfigured for the first cell, the first BWP is the 1st corresponding non-dormant BWP outside active time. In addition, because only the downlink BWP can be configured as a dormant BWP, when the active downlink BWP is a dormant BWP, the active uplink BWP is not a dormant BWP. Therefore, when the first cell is in the dormancy mode, the third BWP may be the current active uplink BWP. Further, this solution may be applied when the first cell operates in a frequency division duplex FDD mode, because in the FDD mode, active uplink BWP switching and active downlink BWP switching are independent.

In a third possible case, when the 1st corresponding non-dormant BWP within active time is not preconfigured for the first cell, the first BWP is the 1st corresponding non-dormant BWP outside active time, and the third BWP is the current active uplink BWP. Because the first cell is in the dormancy mode, and at least one of the 1st corresponding non-dormant BWP within active time and the 1st corresponding non-dormant BWP outside active time is definitely configured for the first cell, when the 1st corresponding non-dormant BWP within active time is not preconfigured for the first cell, that is, the 1st corresponding non-dormant BWP outside active time is preconfigured for the first cell, the first BWP is the 1st corresponding non-dormant BWP outside active time. In this way, implementation is simple. Alternatively, it may alternatively be the following: When the 1st corresponding non-dormant BWP outside active time is not preconfigured for the first cell, the first BWP is the 1st corresponding non-dormant BWP within active time. In addition, because only the downlink BWP can be configured as a dormant BWP, when the active downlink BWP is a dormant BWP, the active uplink BWP is not a dormant BWP. Therefore, when the first cell is in the dormancy mode, the third BWP may be the current active uplink BWP. Further, this solution may be applied when the first cell operates in a frequency division duplex FDD mode, because in the FDD mode, active uplink BWP switching and active downlink BWP switching are independent.

In a fourth possible case, when the 1st corresponding non-dormant BWP within active time is preconfigured for the first cell, the first BWP is the 1st corresponding non-dormant BWP within active time, and the third BWP is the uplink BWP whose ID is the same as the ID of the 1st corresponding non-dormant BWP of the first cell within active time. Because the first cell is in the dormancy mode, and at least one of the 1st corresponding non-dormant BWP within active time and the 1st corresponding non-dormant BWP outside active time is definitely configured for the first cell, when the 1st corresponding non-dormant BWP within active time is preconfigured for the first cell, the first BWP is the 1st corresponding non-dormant BWP within active time. In this way, implementation is simple. Similarly, alternatively, it may alternatively be the following: When the 1st corresponding non-dormant BWP outside active time is preconfigured for the first cell, the first BWP is the 1st corresponding non-dormant BWP outside active time. In addition, because only the downlink BWP can be configured as a dormant BWP, when the active downlink BWP is a dormant BWP, the active uplink BWP is not a dormant BWP. Therefore, the first cell is in the dormancy mode, and the third BWP may be the uplink BWP whose ID is the same as the ID of the 1st corresponding non-dormant BWP of the first cell within active time. Further, this solution may be applied when the first cell operates in a time division duplex TDD mode, because in the TDD mode, active uplink BWP switching and active downlink BWP switching are bound, and BWP IDs are the same.

In a fifth possible case, when the 1st corresponding non-dormant BWP within active time is not preconfigured for the first cell, the first BWP is the 1st corresponding non-dormant BWP outside active time, and the third BWP is the uplink BWP whose ID is the same as the ID of the 1st corresponding non-dormant BWP of the first cell outside active time. Because the first cell is in the dormancy mode, and at least one of the 1st corresponding non-dormant BWP within active time and the 1st corresponding non-dormant BWP outside active time is definitely configured for the first cell, when the 1st corresponding non-dormant BWP within active time is not preconfigured for the first cell, that is, the 1st corresponding non-dormant BWP outside active time is preconfigured for the first cell, the first BWP is the 1st corresponding non-dormant BWP outside active time. In this way, implementation is simple. Alternatively, it may alternatively be the following: When the 1st corresponding non-dormant BWP outside active time is not preconfigured for the first cell, the first BWP is the 1st corresponding non-dormant BWP within active time. In addition, because only the downlink BWP can be configured as a dormant BWP, when the active downlink BWP is a dormant BWP, the active uplink BWP is not a dormant BWP. Therefore, the first cell is in the dormancy mode, and the third BWP may be the uplink BWP whose ID is the same as the ID of the 1st corresponding non-dormant BWP of the first cell within active time. Further, this solution may be applied when the first cell operates in a time division duplex TDD mode, because in the TDD mode, active uplink BWP switching and active downlink BWP switching are bound, and BWP IDs are the same.

In a sixth possible case, when a dormancy indication indicating that the first cell enters the dormancy mode is received within active time, the first BWP is the 1st corresponding non-dormant BWP within active time, and the third BWP is the current active uplink BWP. Whether the first BWP is the 1st corresponding non-dormant BWP within active time or the first BWP is the 1st corresponding non-dormant BWP outside active time is determined based on whether the dormancy indication indicating that the first cell enters the dormancy mode is received within active time or received outside active time. In this way, scheduling flexibility of the network device can be improved, and the network device may control the quantity of information bits of the first DCI format based on time at which the dormancy indication is sent. Alternatively, it may alternatively be the following: When a dormancy indication indicating that the first cell enters the dormancy mode is carried in a DCI format being DCI format 0_1 or DCI format 1_1, the first BWP is the 1st corresponding non-dormant BWP within active time. In this way, scheduling flexibility of a base station can be improved, and the base station may control the quantity of information bits of the first DCI format based on the DCI format for sending the dormancy indication. Because only the downlink BWP can be configured as a dormant BWP, when the active downlink BWP is a dormant BWP, the active uplink BWP is not a dormant BWP. Therefore, when the first cell is in the dormancy mode, the third BWP may be the current active uplink BWP. Further, this solution may be applied when the first cell operates in a frequency division duplex FDD mode, because in the FDD mode, active uplink BWP switching and active downlink BWP switching are independent.

In a seventh possible case, when a dormancy indication indicating that the first cell enters the dormancy mode is received outside active time, the first BWP is the 1st corresponding non-dormant BWP outside active time, and the third BWP is the current active uplink BWP.

Whether the first BWP is the 1st corresponding non-dormant BWP within active time or the first BWP is the 1st corresponding non-dormant BWP outside active time is determined based on whether the dormancy indication indicating that the first cell enters the dormancy mode is received within active time or received outside active time. In this way, scheduling flexibility of a base station can be improved, and the base station may control the quantity of information bits of the first DCI based on time at which the dormancy indication is sent. Alternatively, it may alternatively be the following: When a dormancy indication indicating that the first cell enters the dormancy mode is carried in a DCI format being DCI format 2_6, the first BWP is the 1st corresponding non-dormant BWP outside active time. In this way, scheduling flexibility of a base station can be improved, and the base station may control the quantity of information bits of the first DCI format based on the DCI format for sending the dormancy indication In addition, because only the downlink BWP can be configured as a dormant BWP, when the active downlink BWP is a dormant BWP, the active uplink BWP is not a dormant BWP. Therefore, when the first cell is in the dormancy mode, the third BWP may be the current active uplink BWP. Further, this solution may be applied when the first cell operates in a frequency division duplex FDD mode, because in the FDD mode, active uplink BWP switching and active downlink BWP switching are independent.

In an eighth possible case, when a dormancy indication indicating that the first cell enters the dormancy mode is received within active time, the first BWP is the 1st corresponding non-dormant BWP within active time, and the third BWP is the uplink BWP whose ID is the same as the ID of the 1st corresponding non-dormant BWP of the first cell within active time. Whether the first BWP is the 1st corresponding non-dormant BWP within active time or the first BWP is the 1st corresponding non-dormant BWP outside active time is determined based on whether the dormancy indication indicating that the first cell enters the dormancy mode is received within active time or received outside active time. In this way, scheduling flexibility of a base station can be improved, and the base station may control the quantity of information bits of the first DCI based on time at which the dormancy indication is sent. Alternatively, it may alternatively be the following: When a dormancy indication indicating that the first cell enters the dormancy mode is carried in a DCI format being DCI format 0_1 or DCI format 1_1, the first BWP is the 1st corresponding non-dormant BWP within active time. In this way, scheduling flexibility of a base station can be improved, and the base station may control the quantity of information bits of the first DCI format based on the DCI format for sending the dormancy indication. In addition, because only the downlink BWP can be configured as a dormant BWP, when the active downlink BWP is a dormant BWP, the active uplink BWP is not a dormant BWP. Therefore, the first cell is in the dormancy mode, and the third BWP may be the uplink BWP whose ID is the same as the ID of the 1st corresponding non-dormant BWP of the first cell within active time. Further, this solution may be applied when the first cell operates in a time division duplex TDD mode, because in the TDD mode, active uplink BWP switching and active downlink BWP switching are bound, and BWP IDs are the same.

In a ninth possible case, when a dormancy indication indicating that the first cell enters the dormancy mode is received outside active time, the first BWP is the 1st corresponding non-dormant BWP outside active time, and the third BWP is the uplink BWP whose ID is the same as the ID of the 1st corresponding non-dormant BWP of the first cell outside active time. Whether the first BWP is the 1st corresponding non-dormant BWP within active time or the first BWP is the 1st corresponding non-dormant BWP outside active time is determined based on whether the dormancy indication indicating that the first cell enters the dormancy mode is received within active time or received outside active time. In this way, scheduling flexibility of a base station can be improved, and the base station may control the quantity of information bits of the first DCI based on time at which the dormancy indication is sent. Alternatively, it may alternatively be the following:

When a dormancy indication indicating that the first cell enters the dormancy mode is carried in a DCI format being DCI format 2_6, the first BWP is the 1st corresponding non-dormant BWP outside active time. In this way, scheduling flexibility of a base station can be improved, and the base station may control the quantity of information bits of the first DCI format based on the DCI format for sending the dormancy indication In addition, because only the downlink BWP can be configured as a dormant BWP, when the active downlink BWP is a dormant BWP, the active uplink BWP is not a dormant BWP. Therefore, the first cell is in the dormancy mode, and the third BWP may be the uplink BWP whose ID is the same as the ID of the 1st corresponding non-dormant BWP of the first cell within active time. Further, this solution may be applied when the first cell operates in a time division duplex TDD mode, because in the TDD mode, active uplink BWP switching and active downlink BWP switching are bound, and BWP IDs are the same.

S430: Monitor the first DCI format based on the quantity of information bits of the first DCI format.

The terminal monitoring one DCI format means that the terminal attempts to perform blind detection on a control channel on a time-frequency resource corresponding to a control channel candidate, and performs decoding and CRC check based on a quantity of information bits of the DCI format. If the check succeeds, it is considered that one DCI format is successfully received on the control channel candidate; or if the check fails, it is considered that no control channel is detected on the control channel candidate.

Optionally, if the first DCI format needs to be aligned with a DCI size of another DCI format, the terminal monitoring the first DCI format based on the quantity of information bits of the first DCI format may be understood as that the terminal determines a DCI size of the first DCI format based on the quantity of information bits of the first DCI format and a quantity of information bits of the another DCI format, and monitors the first DCI format based on the DCI size of the first DCI format. Correspondingly, the network device sending the first DCI format based on the quantity of information bits of the first DCI format may be understood as that the network device determines the DCI size of the first DCI format based on the quantity of information bits of the first DCI format and the quantity of information bits of the another DCI format, and sends the first DCI format based on the DCI size of the first DCI format. In this application, if DCI size alignment needs to be performed on the first DCI format and the another DCI format, the quantity of information bits of the first DCI format is a quantity of information bits of the first DCI format before the DCI size alignment, a quantity of information bits of the first DCI format before bit padding, or a quantity of information bits of the first DCI format before bit truncation.

Optionally, when the first cell operates in a time division duplex TDD mode, the first DCI format is used to schedule downlink data transmission. The method further includes: receiving second cross carrier scheduling information, where the second cross carrier scheduling information indicates the terminal to monitor a second downlink control information DCI format, and the second DCI format can be used to schedule uplink data transmission of two or more cells; when the first cell is in the inactive mode or the dormancy mode, determining a quantity of information bits of the second DCI format based on a second BWP ID of the first BWP, where the ID of the first BWP is the same as an ID of the second BWP; and monitoring the second DCI format based on the quantity of information bits of the second DCI format. In this application, that the first cell operates in the time division duplex TDD mode may alternatively be that the first cell operates in an unpaired spectrum (Unpaired Spectrum).

Optionally, when the first cell operates in a frequency division duplex FDD mode, the first DCI format is used to schedule downlink data transmission. The terminal may further receive second cross carrier scheduling information, where the second cross carrier scheduling information indicates the terminal to monitor a second downlink control information DCI format, and the second DCI format can be used to schedule uplink data transmission of two or more cells; when the first cell is in the dormancy mode, determine a quantity of information bits of the second DCI format based on a second BWP ID of the first cell, where the second BWP is an active uplink BWP of the first cell; and monitor the second DCI format based on the quantity of information bits of the second DCI format. In this application, that the first cell operates in the time division duplex FDD mode may alternatively be that the first cell operates in a paired spectrum (Paired Spectrum).

Optionally, when the first cell operates in a frequency division duplex FDD mode, the first DCI format is used to schedule downlink data transmission. When the first cell is in the dormancy mode (or an active downlink BWP of the first cell is a dormant BWP), if the DCI for switching the first cell from the non-dormancy mode to the dormancy mode is received within active time, or the DCI format for switching the first cell from the non-dormancy mode to the dormancy mode is DCI format 0_1 or DCI format 1_1, the terminal determines that the first BWP ID is a 1st corresponding non-dormant BWP ID within the active time; or if the DCI for switching the first cell from the non-dormancy mode to the dormancy mode is received outside active time, or the DCI format for switching the first cell from the non-dormancy mode to the dormancy mode is DCI format2_6, the terminal determines that the first BWP ID is a 1st corresponding non-dormant BWP ID outside the active time. In addition, the terminal may further receive second cross carrier scheduling configuration information, where the second cross carrier scheduling configuration information indicates the terminal to monitor a second downlink control information DCI format, and the second DCI format can be used to schedule uplink data transmission of two or more cells; when the first cell is in the dormancy mode, determine a quantity of information bits of the second DCI format based on a second BWP of the first cell, and determine that the second BWP is an active uplink BWP of the first cell; and monitor the second DCI format based on the quantity of information bits of the second DCI format. In this application, a process and a method for determining the quantity of information bits of the second DCI format based on the second BWP are similar to a process and a method for determining the quantity of information bits of the first DCI format based on the first BWP. Details are not described herein again.

According to the technical solution of this application, one piece of DCI is used to schedule data transmission of a plurality of cells, and when the first cell is in the active mode or the dormancy mode, a format of the DCI is determined based on a BWP ID of the first cell. This helps accurately determine the DCI format and improve information transmission performance.

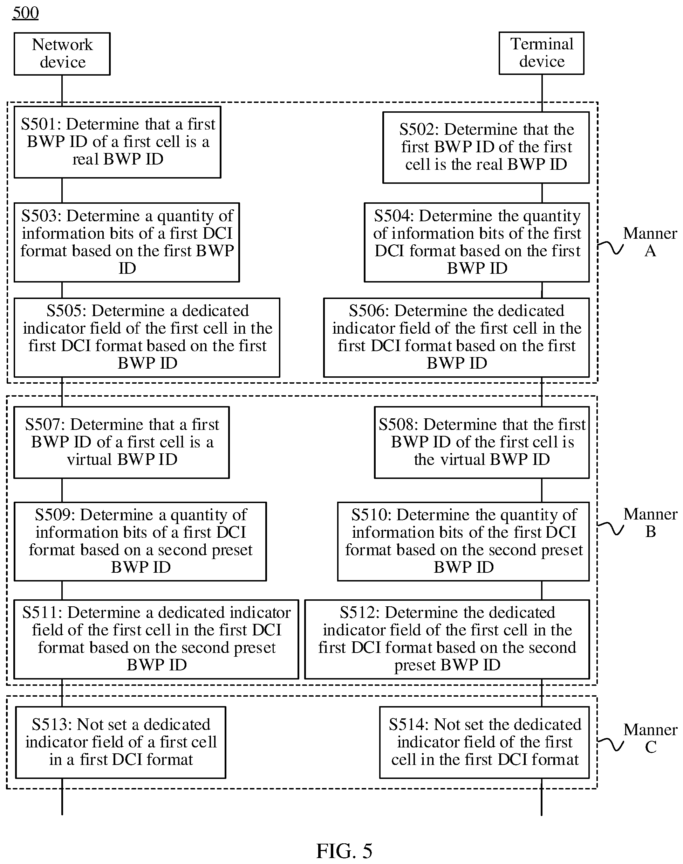

Optionally, in this embodiment of this application, before determining the quantity of information bits of the first DCI format based on the first BWP of the first cell, the network device and the terminal may first determine the first BWP ID of the first cell, namely, a sequence number of the first BWP. The first BWP ID is the ID of the first BWP, namely, the sequence number of the first BWP. Specifically, there may be three manners (a manner A, a manner B, and a manner C) shown in FIG. 5:

Manner A:

S501: The network device determines that the first BWP ID of the first cell is a real BWP ID.

S502: The terminal determines that the first BWP ID of the first cell is the real BWP ID.

It should be understood that, in this application, the real BWP ID is a representative of a type of BWP ID (including but not limited to BWP IDs in manners 1 to 11 below), and should not be used as a limitation on this application. The real BWP is specifically a BWP configured with a bandwidth of the BWP or a subcarrier spacing SCS. In other words, provided that one BWP is configured with any one of a bandwidth of the BWP or a subcarrier spacing SCS, the BWP may be considered as a real BWP. Correspondingly, for ease of description, an ID of the real BWP may be referred to as a real BWP ID.

It should be further understood that, in the manner A, if a carrier indicator field or a carrier group indicator field in the first DCI format indicates the first cell, a BWP indicator field in the first DCI format indicates that a BWP of the first cell is the first BWP, or indicates that a BWP ID of the first cell is the first BWP ID.

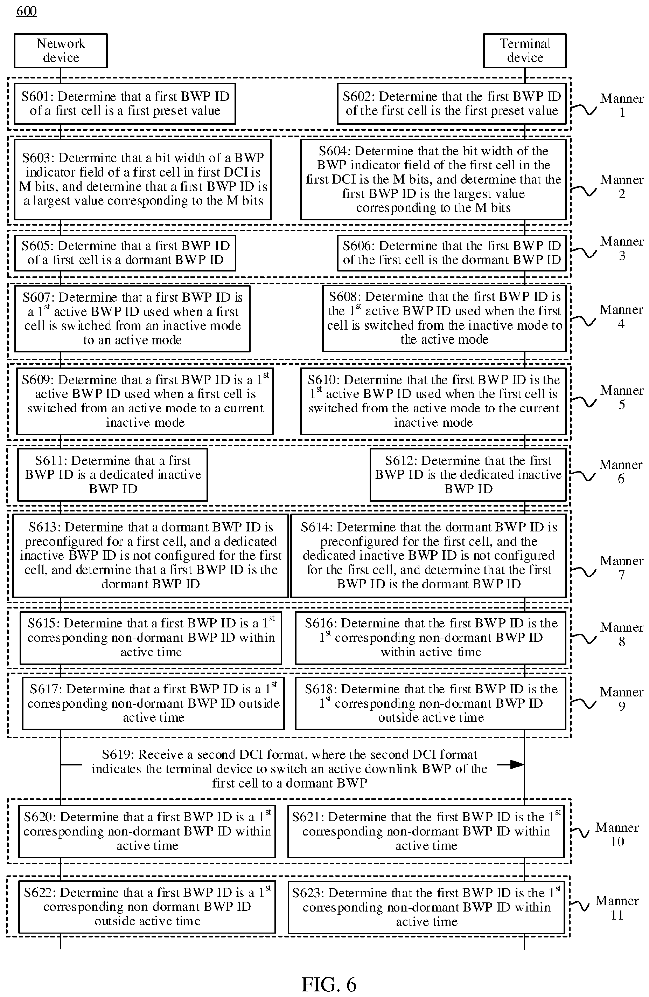

In this embodiment of this application, a manner in which the network device determines the first BWP ID of the first cell as the real BWP ID is the same a manner in which the terminal determines the first BWP ID of the first cell as the real BWP ID. For brevity, the following uses only the terminal as an example for specific description. Specifically, as shown in FIG. 6, 11 manners (the manner 1 to the manner 11 in FIG. 6) may be included:

Manner 1:

This manner may be performed regardless of whether the first cell is in the inactive mode or the dormancy mode.

S601: The network device determines that the first BWP ID of the first cell is a first preset value.

S602: The terminal determines that the first BWP ID of the first cell is the first preset value.

The first preset value may be a value protocol-specified or preset, for example, 0 or 1. Optionally, the first DCI format is used to schedule uplink data transmission, and the first preset value may be a value that is protocol-specified or preset and that is used for uplink transmission. Optionally, the first DCI format is used to schedule downlink data transmission, and the first preset value may be a value that is protocol-specified or preset and that is used for downlink transmission.

In this way, a high-layer configuration is not required, implementation is simple, and a specific check function can be implemented. For example, when the terminal receives one piece of DCI, but a BWP ID corresponding to the first cell in the DCI is not a first preset value, the terminal may consider that the DCI is false alarm DCI, and may discard the DCI.

Manner 2:

This manner may be performed regardless of whether the first cell is in the inactive mode or the dormancy mode.

S603: The network device determines that a bit width of a BWP indicator field of the first cell in the first DCI is M bits, and determines that the first BWP ID is a largest value corresponding to the M bits.

S604: The terminal determines that the bit width of the BWP indicator field of the first cell in the first DCI is the M bits, and determines that the first BWP ID is the largest value corresponding to the M bits.

Specifically, the terminal may determine the bit width of the BWP indicator field of the first cell according to the foregoing method. For example, the terminal determines that the bit width of the BWP indicator field of the first cell is 2 bits, and further determines that 2 bits corresponding to the first BWP ID are 11 (the largest value). For another example, the terminal determines that the bit width of the BWP indicator field of the first cell is 1 bit, and further determines that 2 bits corresponding to the first BWP ID are 1 (the largest value).

When the bit width of the BWP indicator field of the first cell is determined, the bit width is determined only based on a BWP other than the first BWP or the first BWP ID, and is not determined based on the first BWP or the first BWP ID.

Optionally, the first DCI format is used to schedule uplink data transmission, and the terminal determines the bit width of the BWP indicator field of the first cell in the first DCI based on an uplink BWP other than the first BWP or the first BWP ID. Optionally, the first DCI format is used to schedule downlink data transmission, and the terminal determines the bit width of the BWP indicator field of the first cell in the first DCI based on a downlink BWP other than the first BWP or the first BWP ID.

In this way, a higher layer configuration is not required, implementation is simple, and a bit width of an existing BWP indicator field is not increased. In addition, compared with the first manner, in this manner, the used BWP ID may not be a real BWP, and is equivalent to a dedicated virtual BWP, to indicate a BWP in the inactive mode without causing confusion. In this solution, a specific check function can be implemented. For example, when the terminal receives one piece of DCI, but a BWP ID corresponding to the first cell in the DCI is not the largest value corresponding to the M bits, the terminal may consider that the DCI is false alarm DCI, and may discard the DCI.

Manner 3:

This manner may be performed regardless of whether the first cell is in the inactive mode or the dormancy mode.

S605: The network device determines that the first BWP ID of the first cell is a dormant BWP ID.

S606: The terminal determines that the first BWP ID of the first cell is the dormant BWP ID.

Specifically, when a dormant BWP ID (dormant BWP ID) is preconfigured for the first cell, that is, dormantBWP-Id is configured, the terminal determines that the first BWP ID is the dormant BWP ID. Optionally, when the first DCI format is used to schedule downlink data transmission, the first BWP is a downlink BWP, and when the dormant BWP ID is preconfigured for the first cell, the terminal determines that the first BWP ID is the dormant BWP ID.

In this way, because no data is scheduled for the dormant BWP ID whether in the dormancy mode or the inactive mode, confusion is not caused. In this solution, a specific check function can be implemented. For example, when the terminal receives one piece of DCI, but a BWP ID corresponding to the first cell in the DCI is not a dormant BWP ID, the terminal may consider that the DCI is false alarm DCI, and may discard the DCI.

Manner 4:

When the first cell is in the inactive mode, this manner may be performed.

S607: The network device determines that the first BWP ID is a $1^{st}$ BWP ID used when the first cell is switched from the inactive mode to the active mode.

S608: The terminal determines that the first BWP ID is the $1^{st}$ BWP ID used when the first cell is switched from the inactive mode to the active mode.

Specifically, an English name of the $1^{st}$ BWP ID used when the first cell is switched from the inactive mode to the active mode may be a firstActiveDownlinkBWP ID (applicable to downlink data transmission) or a firstActiveUplinkBWP ID (applicable to uplink data transmission).

Optionally, the first DCI format is used to schedule uplink data transmission, and the terminal may determine that the first BWP ID is a $1^{st}$ active uplink BWP ID (firstActiveUplinkBWP ID) used when the first cell is switched from the inactive mode to the active mode. Optionally, the first DCI format is used to schedule downlink data transmission, and the terminal may determine that the first BWP ID is a $1^{st}$ active downlink BWP ID (firstActiveDownlinkBWP ID) used when the first cell is switched from the inactive mode to the active mode. The firstActiveDownlinkBWP ID and the firstActiveUplinkBWP ID are configured by the network device for the terminal, and respectively correspond to higher-layer parameters firstActiveDownlinkBWP-Id and firstActiveUplinkBWP-Id.

In this way, when the first cell enters the active mode from the inactive mode, the two BWP IDs may be directly used. Therefore, the two BWP IDs may be used to determine a size of another field corresponding to the first cell in the DCI. In this way, when the first cell enters the active mode, a format of the DCI does not change, and device computing power consumption can be reduced. In this solution, a specific check function can be implemented. For example, when the terminal receives one piece of DCI, but a BWP ID corresponding to the first cell in the DCI is not a dormant BWP ID, the terminal may consider that the DCI is false alarm DCI, and may discard the DCI.

Manner 5:

When the first cell is in the inactive mode, this manner may be performed.

S609: The network device determines that the first BWP ID is a $1^{st}$ active BWP ID used when the first cell is switched from the active mode to a current inactive mode.

S610: The terminal determines that the first BWP ID is the $1^{st}$ active BWP ID used when the first cell is switched from the active mode to the current inactive mode.

Specifically, the $1^{st}$ active BWP ID used when the first cell is switched from the active mode to the current inactive mode is a last active BWP used when the first cell is in the active mode before the first cell is deactivated. Optionally, the first DCI format is used to schedule uplink data transmission, and when the first cell is in the inactive mode, the terminal may determine that the first BWP is an active uplink BWP ID used before the first cell is switched from the active mode to the current inactive mode. Optionally, the first DCI format is used to schedule downlink data transmission, and when the first cell is in the inactive mode, the terminal may determine that the first BWP is an active downlink BWP ID used before the first cell is switched from the active mode to the current inactive mode.

In this way, when the first cell enters the inactive mode from the active mode, the two BWP IDs may be directly used. Therefore, the two BWP IDs may be used to determine a size of another field corresponding to the first cell in the DCI. In this way, when the first cell enters the active mode, a format of the DCI does not change, and device computing power consumption can be reduced.

Manner 6:

When the first cell is in the inactive mode, this manner may be performed.

S611: The network device determines that the first BWP ID is a dedicated inactive BWP ID.

S612: The terminal determines that the first BWP ID is the dedicated inactive BWP ID.

Specifically, the terminal needs to first determine that the dedicated inactive BWP ID is preconfigured for the first cell; and after the dedicated inactive BWP ID is preconfigured for the first cell, further determine that the first BWP ID is the dedicated inactive BWP ID. Optionally, the first DCI format is used to schedule uplink data transmission, and when the first cell is in the inactive mode, and a dedicated inactive uplink BWP ID is preconfigured for the first cell, the terminal may determine that the first BWP ID is the dedicated inactive uplink BWP ID. Optionally, the first DCI format is used to schedule downlink data transmission, and when the first cell is in the inactive mode, and a dedicated inactive uplink BWP ID is preconfigured for the first cell, the terminal may determine that the first BWP ID is the dedicated inactive downlink BWP ID.

Manner 7:

When the first cell is in the dormancy mode, this manner may be performed.

S613: The network device determines that a dormant BWP ID is preconfigured for the first cell, and a dedicated inactive BWP ID is not configured for the first cell, and determines that the first BWP ID is the dormant BWP ID.

S614: The terminal determines that the dormant BWP ID is preconfigured for the first cell, and the dedicated inactive BWP ID is not configured for the first cell, and determines that the first BWP ID is the dormant BWP ID.

Specifically, the terminal needs to first determine that the dormant BWP ID is preconfigured for the first cell, and the dedicated inactive BWP ID is not configured for the first cell, so that the terminal can determine that the first BWP ID is the dormant BWP ID.

Manner 8:

When the first cell is in the dormancy mode (or an active BWP of the first cell is a dormant BWP), this manner may be performed.

S615: The network device determines that the first BWP ID is a $1^{st}$ corresponding non-dormant BWP ID within active time.

S616: The terminal determines that the first BWP ID is the $1^{st}$ corresponding non-dormant BWP ID within the active time.

Specifically, the $1^{st}$ corresponding non-dormant BWP ID within the active time may be firstWithinActiveTimeBWP-Id. The terminal needs to first determine that the $1^{st}$ corresponding non-dormant BWP ID within the active time is configured for the first cell, so that the terminal can further determine that the first BWP ID is the $1^{st}$ corresponding non-dormant BWP ID within the active time.

In this application, a $1^{st}$ corresponding non-dormant BWP within the active time of the first cell is a $1^{st}$ non-dormant BWP used when an active downlink BWP of the first cell is switched from a dormant BWP to a non-dormant BWP, where DCI indicating that the active downlink BWP of the first cell is switched to the dormant BWP is received within the active time; or is a $1^{st}$ non-dormant BWP used when an active downlink BWP of the first cell is switched from a dormant BWP to a non-dormant BWP, where a format of DCI indicating that the active downlink BWP of the first cell is switched to the dormant BWP is DCI format 0_1 or DCI format 1_1.

In this way, when the first cell enters the non-dormancy mode from the dormancy mode, the first BWP ID may be directly used. Therefore, the BWP ID may be used to determine a size of another field corresponding to the first cell in the DCI. In this way, when the first cell exits the dormancy mode, a format of the DCI does not change, and device computing power consumption can be reduced. In this solution, a specific check function can be implemented. For example, in the dormancy mode, when the terminal receives one piece of DCI, but a BWP ID corresponding to the first cell in the DCI is not the $1^{st}$ corresponding non-dormant BWP ID within the active time, the terminal may consider that the DCI is false alarm DCI, and may discard the DCI.

Manner 9:

When the first cell is in the dormancy mode (or an active BWP of the first cell is a dormant BWP), this manner may be performed.

S617: The network device determines that the first BWP ID is a 1st corresponding non-dormant BWP ID outside active time.

S618: The terminal determines that the first BWP ID is the 1st corresponding non-dormant BWP ID outside the active time.

Specifically, an English name corresponding to the 1st corresponding non-dormant BWP ID outside the active time may be firstOutsideActiveTimeBWP-Id. In this manner, the terminal needs to determine that the 1st corresponding non-dormant BWP ID outside the active time is configured for the first cell, and a 1st corresponding non-dormant BWP ID within the active time is not configured for the first cell, so that the terminal can determine that the first BWP ID is the 1st corresponding non-dormant BWP ID outside the active time.

In this application, a 1st corresponding non-dormant BWP outside the active time of the first cell is a 1st non-dormant BWP used when an active downlink BWP of the first cell is switched from a dormant BWP to a non-dormant BWP, where DCI indicating that the active downlink BWP of the first cell is switched to the dormant BWP is received outside the active time; or is a 1st non-dormant BWP used when an active downlink BWP of the first cell is switched from a dormant BWP to a non-dormant BWP, where a format of DCI indicating that the active downlink BWP of the first cell is switched to the dormant BWP is DCI format 2_6. In this solution, a specific check function can be implemented. For example, in the dormancy mode, when the terminal receives one piece of DCI, but a BWP ID corresponding to the first cell in the DCI is not the 1st corresponding non-dormant BWP ID outside the active time, the terminal may consider that the DCI is false alarm DCI, and may discard the DCI.

Manner 10:

When the first cell is in the dormancy mode (or an active BWP of the first cell is a dormant BWP), this manner may be performed.

S619: Before the first cell enters the dormancy mode, the terminal receives second DCI, where the second DCI indicates the terminal to switch an active downlink BWP of the first cell to a dormant BWP.

Correspondingly, before the first cell enters the dormancy mode, the network device sends the second DCI to the terminal.

Before the first cell enters the dormancy mode, the terminal may further receive the second DCI from the network device, and switch the active downlink BWP of the first cell to the dormant BWP based on the second DCI. In other words, the terminal switches the first cell from the non-dormancy mode to the dormancy mode based on the second DCI.

S620: The network device determines that the first BWP ID is a 1st corresponding non-dormant BWP ID within active time.

S621: The terminal determines that the first BWP ID is the 1st corresponding non-dormant BWP ID within the active time.

When the second DCI is received within the active time, the terminal determines that the first BWP ID is the 1st corresponding non-dormant BWP ID within the active time.

Manner 11:

When the first cell is in the dormancy mode (or an active BWP of the first cell is a dormant BWP), this manner may be performed.

S619: Before the first cell enters the dormancy mode, the terminal receives second DCI, where the second DCI indicates the terminal to switch an active downlink BWP of the first cell to a dormant BWP.

Correspondingly, before the first cell enters the dormancy mode, the network device sends the second DCI to the terminal.

S622: The network device determines that the first BWP ID is a 1st corresponding non-dormant BWP ID outside active time.

S623: The terminal determines that the first BWP ID is the 1st corresponding non-dormant BWP ID outside the active time.

When the second DCI is received outside the active time, the terminal determines that the first BWP ID is a 1st corresponding non-dormant BWP ID outside the active time.

After the first BWP ID is determined in any one of the foregoing manners 1 to 11, the network device and the terminal may further determine a quantity of information bits of the first DCI format and a specific indicator field of the first cell in the first DCI format.

S503: The network device determines the quantity of information bits of the first DCI format based on the first BWP ID.

S504: The terminal determines the quantity of information bits of the first DCI format based on the first BWP ID.

A manner in which the network device determines the quantity of information bits of the first DCI format based on the first BWP ID is the same as a manner in which the terminal determines the quantity of information bits of the first DCI format based on the first BWP ID. For a specific manner and content of the first DCI format, refer to the conventional technology. Details are not described herein again.

S505: The network device determines the specific indicator field of the first cell in the first DCI format based on the first BWP ID.

S506: The terminal determines the specific indicator field of the first cell in the first DCI format based on the first BWP ID.

In this way, according to the technical solution of this application, one piece of DCI is used to schedule data transmission of a plurality of cells, and when the first cell is in the active mode or the dormancy mode, the specific indicator field corresponding to the first cell is determined based on the BWP ID of the first cell. This improves information transmission performance.

Manner B:

This manner may be performed regardless of whether the first cell is in the inactive mode or the dormancy mode.

S507: The network device determines that the first BWP ID of the first cell is a virtual BWP ID.

S508: The terminal determines that the first BWP ID of the first cell is the virtual BWP ID.

Specifically, the terminal may further determine that the first BWP ID is the virtual BWP ID, and a bandwidth of a BWP or a subcarrier spacing SCS is not configured for a BWP corresponding to the virtual BWP ID. Optionally, the first DCI format is used to schedule uplink data transmission, and when the first cell is in the inactive mode, the terminal may determine that the first BWP ID is a virtual uplink BWP ID. Optionally, the first DCI format is used to schedule downlink data transmission, and when the first cell is in the inactive mode, the terminal may determine that the first BWP ID is a virtual downlink BWP ID. The virtual uplink BWP ID and the virtual downlink BWP ID that are configured by the network device and that are received by the terminal may be the same or different.

In this way, implementation is simple, and confusion is not easily caused. In addition, a specific check function can be implemented. For example, when the terminal receives one piece of DCI, but a BWP ID corresponding to the first cell in the DCI is not a virtual BWP ID, the terminal may consider that the DCI is false alarm DCI, and may discard the DCI.

S509: The network device determines a quantity of information bits of the first DCI format based on a second preset BWP ID.

S510: The terminal determines the quantity of information bits of the first DCI format based on the second preset BWP ID.

Specifically, the network device and the terminal may obtain the second preset BWP ID, and determine the quantity of information bits of the first DCI format based on the second preset BWP ID. The second preset BWP ID may be protocol-specified or indicated by a higher layer. This is not limited in this application. Optionally, the network device and the terminal may obtain the second preset BWP ID, set the BWP ID in the first DCI format based on the second preset BWP ID, and determine a quantity of information bits of a BWP indicator field in the first DCI format. Optionally, a manner in which the network device determines the quantity of information bits of the first DCI format based on the first BWP ID is the same as a manner in which the terminal determines the quantity of information bits of the first DCI format based on the first BWP ID. For a specific manner and content of the first DCI format, refer to the conventional technology. Details are not described herein again.

S511: The network device determines a specific indicator field of the first cell in the first DCI format based on the second preset BWP ID.

S512: The terminal determines the specific indicator field of the first cell in the first DCI format based on the second preset BWP ID.

In this way, according to the technical solution of this application, one piece of DCI is used to schedule data transmission of a plurality of cells, and when the first cell is in the active mode or the dormancy mode, the specific indicator field corresponding to the first cell is determined based on the preset BWP ID. This improves information transmission performance.

Manner C:

This manner may be performed regardless of whether the first cell is in the inactive mode or the dormancy mode.

S513: The network device does not set a specific indicator field of the first cell in the first DCI format.

S514: The terminal does not set the specific indicator field of the first cell in the first DCI format.

Specifically, the network device and the terminal may determine the first BWP ID with reference to any one of the foregoing methods. However, regardless of whether the first BWP ID is a real BWP ID or a virtual BWP ID, both the network device and the terminal may not set the specific indicator field of the first cell in the first DCI format.

According to the technical solution of this application, one piece of DCI is used to schedule data transmission of a plurality of cells, and when the first cell is in the active mode or the dormancy mode, a format of the DCI is determined based on a BWP ID of the first cell. The DCI format includes but is not limited to a quantity of information bits of the DCI and a specific indicator field corresponding to each cell. This helps accurately determine the DCI format and improve information transmission performance.

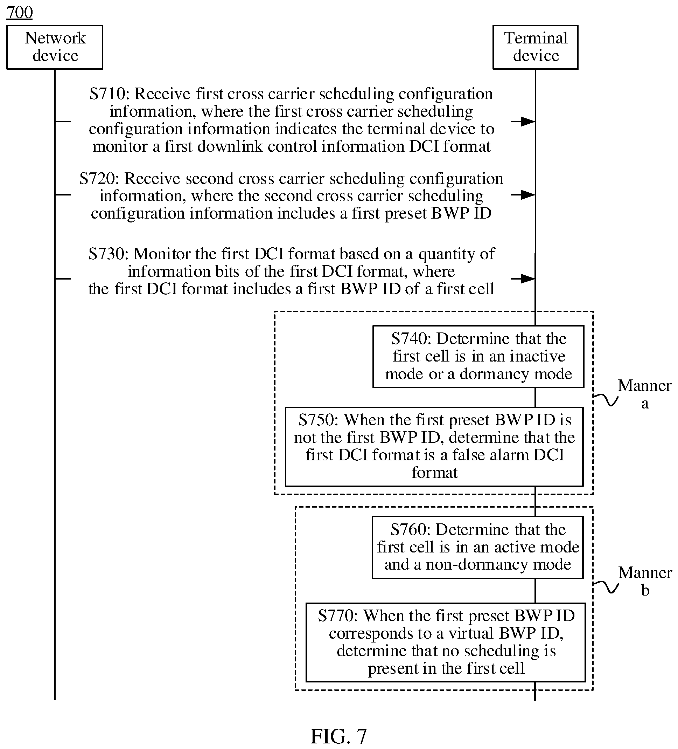

FIG. 7 is a schematic flowchart of another example of a downlink control information transmission method according to this application. This embodiment focuses on how a terminal device performs subsequent processing after receiving a first DCI format, to determine, based on a first BWP ID of a first cell, whether the first DCI format is a false alarm DCI format and whether no scheduling is present in the first cell.

S710: The terminal device receives first cross carrier scheduling configuration information, where the first cross carrier scheduling configuration information indicates the terminal device to monitor the first downlink control information DCI format.

S710 is the same as S410, and details are not described herein again.

S720: The terminal device receives second cross carrier scheduling configuration information, where the second cross carrier scheduling configuration information includes a first preset BWP ID.

Specifically, the terminal device may receive the first preset BWP ID from a network device, or may obtain the first preset BWP ID from another device (for example, a cloud device or a cloud memory) or the like. This is not limited in this application.

Optionally, the terminal device may further determine the first preset BWP ID according to the method in the foregoing embodiment. For example, the terminal device may determine that the first preset BWP ID is a first preset value. The first preset value may be a value protocol-specified or preset, for example, 0 or 1.

S730: The terminal device monitors and receives the first DCI format based on a quantity of information bits of the first DCI format, where the first DCI format includes the first BWP ID of the first cell.

The first BWP ID is a first BWP ID determined by the network device. After receiving the first BWP ID determined by the network device, the terminal device may have the following two processing manners:

Manner a:

S740: The terminal device determines that the first cell is in an inactive mode or a dormancy mode.

S750: When the first BWP ID is not the first preset BWP ID, determine that the first DCI format is the false alarm DCI.

Specifically, when the received first BWP ID determined by the network device is not the first preset BWP ID obtained by the terminal device, the terminal device may determine that the first DCI format is the false alarm DCI format, and may discard the first DCI format.

In this way, when the terminal device receives one DCI format, but a BWP ID corresponding to the first cell in the DCI format is not a preset BWP ID, the terminal device may consider that the DCI format is the false alarm DCI format, and may discard the DCI format, to reduce a false alarm probability, and improve information transmission performance.

Manner b:

S760: The terminal device determines that the first cell is in an active mode and a non-dormancy mode.

S770: When the first BWP ID is a virtual BWP ID, determine that no scheduling is present in the first cell.

Specifically, when the first BWP ID determined by the network device is the virtual BWP ID, the terminal device may determine that no scheduling is present in the first cell, that is, the first DCI format is not used to schedule data transmission of the first cell.

Optionally, when the received first BWP ID determined by the network device is a dormant BWP ID, the terminal device may also determine that no scheduling is present in the first cell, that is, the first DCI format is not used to schedule data transmission of the first cell.

Optionally, when the received first BWP ID determined by the network device is the virtual BWP ID or a dormant BWP ID, the terminal device may further consider that the DCI format is the false alarm DCI format, and may discard the DCI format, to reduce a false alarm probability, and improve information transmission performance.

In this manner, the BWP ID indicates that no scheduling is present, thereby extending an indication range of a CIF field. The example in which two bits indicate four carrier combinations shown in Table 5 is still used. If the CIF field indicates 3, and a BWP ID of CC2 indicates that the BWP ID does not correspond to a real BWP (that is, is the virtual BWP ID) or is the dormantBWP-Id in TDD, the terminal device considers that no scheduling is present on CC2. In this way, a combination of the CIF field and a BWP indicator field indicates scheduling of three cells: CC0, CC1, and CC3. When a bit width of the CIF field is not extended, the indication range of the CIF field is extended, and bit overheads of the DCI format are reduced.

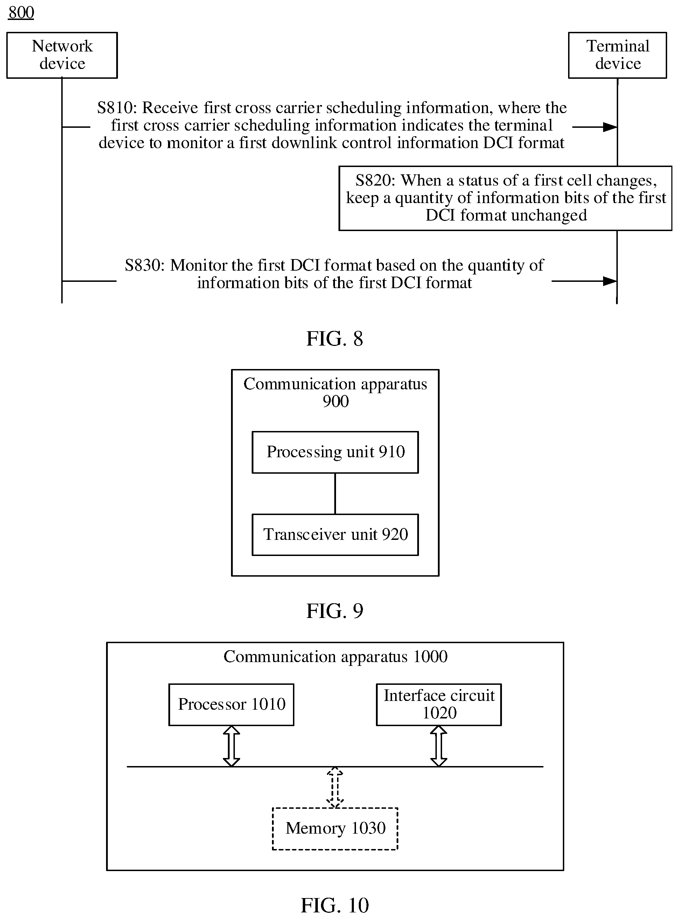

FIG. 8 is a schematic flowchart of still another example of a downlink control information transmission method according to this application. In this embodiment, regardless of what change occurs in a status of a scheduled cell (for example, a first cell), a quantity of information bits of a DCI format for scheduling the cell is kept unchanged.

S810: A terminal receives first cross carrier scheduling configuration information, where the first cross carrier scheduling configuration information indicates the terminal device to monitor a first downlink control information DCI format.

Correspondingly, a network device sends the first cross carrier scheduling configuration information.

The first DCI format can be used to simultaneously schedule data transmission of two or more cells, and the first DCI format can be used to schedule the first cell. The first DCI format being used to simultaneously schedule data transmission of two or more cells may be understood as that the first DCI format can be used to simultaneously schedule downlink data transmission of two or more cells; the first DCI format can be used to simultaneously schedule uplink data transmission of two or more cells; or the first DCI format can be used to simultaneously schedule data transmission of two or more cells, and the data transmission is uplink data transmission or downlink data transmission.

S820: When the status of the first cell changes, the terminal keeps a quantity of information bits of the first DCI format unchanged.

Correspondingly, when the status of the first cell changes, the network device also keeps the quantity of information bits of the first DCI format unchanged.

Changing the status of the first cell includes but is not limited to: switching the first cell from an active mode to an inactive mode, switching the first cell from a non-dormancy mode to a dormancy mode, switching the first cell from an inactive mode to an active mode, and switching the first cell from a dormancy mode to a non-dormancy mode.

S830: The terminal monitors the first DCI format based on the quantity of information bits of the first DCI format.

Correspondingly, the network device sends the first DCI format based on the quantity of information bits of the first DCI format.

The terminal monitoring one DCI format means that the terminal attempts to perform blind detection on a control channel on a time-frequency resource corresponding to a control channel candidate, and performs decoding and CRC check based on a quantity of information bits of the DCI format. If the check succeeds, it is considered that one DCI format is successfully received on the control channel candidate; or if the check fails, it is considered that no control channel is detected on the control channel candidate.

According to the technical solution of this application, one piece of DCI is used to schedule data transmission of a plurality of cells, and when a status of a scheduled cell changes, a quantity of information bits of the DCI is kept unchanged, to help accurately determine a DCI format, and reduce implementation complexity of the terminal or the network device.

It may be understood that, to implement the functions in the foregoing embodiments, the network device and the terminal include corresponding hardware structures and/or software modules for performing each function. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

FIG. 9 and FIG. 10 are diagrams of possible structures of communication apparatuses according to embodiments of this application. These communication apparatuses may be configured to implement functions of the terminal or the network device in the foregoing method embodiments, and therefore can also implement beneficial effects of the foregoing method embodiments. In embodiments of this application, the communication apparatus may be one of the terminal devices 102 to 104 shown in FIG. 1, or may be the network device 101 shown in FIG. 1, or may be a module (for example, a chip) used in the terminal or the network device.

As shown in FIG. 9, a communication apparatus 900 includes a processing unit 910 and a transceiver unit 920. The communication apparatus 900 is configured to implement functions of the terminal or the network device in the method embodiments shown in FIG. 4 to FIG. 8.

When the communication apparatus 900 is configured to implement the function of the terminal in the method embodiment shown in FIG. 4, the transceiver unit 920 is configured to receive first cross carrier scheduling configuration information, where the first cross carrier scheduling configuration information indicates the terminal device to monitor a first downlink control information DCI format, and the first DCI format can be used to schedule data transmission of two or more cells; the processing unit 910 is configured to: when a first cell is in an inactive mode or a dormancy mode, determine a quantity of information bits of the first DCI format based on a first bandwidth part BWP of the first cell; and the transceiver unit 920 is further configured to monitor the first DCI format based on the quantity of information bits of the first DCI format.

Optionally, the transceiver unit 920 is further configured to receive a second DCI format. The processing unit 910 is specifically configured to switch an active downlink BWP of the first cell to a dormant BWP based on the second DCI format.

Optionally, the transceiver unit 920 is further configured to receive second cross carrier scheduling configuration information.

When the communication apparatus 900 is configured to implement the function of the network device in the method embodiment shown in FIG. 4, the transceiver unit 920 is configured to send first cross carrier scheduling configuration information, where the first cross carrier scheduling configuration information indicates a terminal device to monitor a first downlink control information DCI format, and the first DCI format can be used to schedule data transmission of two or more cells; the processing unit 910 is configured to: when a first cell is in an inactive mode or a dormancy mode, determine a quantity of information bits of the first DCI format based on a first bandwidth part BWP of the first cell; and the transceiver unit 920 is further configured to monitor the first DCI format based on the quantity of information bits of the first DCI format.

Optionally, the transceiver unit 920 is further configured to send a second DCI format.

Optionally, the transceiver unit 920 is further configured to send second cross carrier scheduling configuration information.

For more detailed descriptions of the processing unit 910 and the transceiver unit 920, refer to related descriptions in the method embodiment shown in FIG. 4.

As shown in FIG. 10, a communication apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1000 may further include a memory 1030, configured to store instructions to be executed by the processor 1010, store input data required for running the instructions by the processor 1010, or store data generated after the processor 1010 runs the instructions.

When the communication apparatus 1000 is configured to implement the method shown in FIG. 4, the processor 1010 is configured to implement the function of the processing unit 910, and the interface circuit 1020 is configured to implement the function of the transceiver unit 920.

When the communication apparatus is a chip used in a terminal, the chip in the terminal implements functions of the terminal in the foregoing method embodiments. The chip in the terminal receives information from another module (for example, a radio frequency module or an antenna) in the terminal, where the information is sent by a network device to the terminal. Alternatively, the chip in the terminal sends information to another module (for example, the radio frequency module or the antenna) in the terminal, where the information is sent by the terminal to the network device.

When the communication apparatus is a module used in a network device, the module in the network device implements functions of the network device in the foregoing method embodiments. The module in the network device receives information from another module (for example, a radio frequency module or an antenna) in the network device, where the information is sent by a terminal to the network device. Alternatively, the module in the network device sends information to another module (for example, the radio frequency module or the antenna) in the network device, where the information is sent by the network device to the terminal. The module in the network device herein may be a baseband chip of the network device, or may be a DU or another module. The DU herein may be a DU in an open radio access network (open radio access network, O-RAN) architecture.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or any regular processor, or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in the network device or the terminal. The processor and the storage medium may alternatively exist in the network device or the terminal as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a special-purpose computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1.　A downlink control information transmission method, comprising:

receiving first cross carrier scheduling configuration information, wherein the first cross carrier scheduling configuration information indicates a terminal device to monitor a first downlink control information DCI format, and the first DCI format can be used to schedule data transmission of two or more cells;
when a first cell is in an inactive mode or a dormancy mode, determining a quantity of information bits of the first DCI format based on a first bandwidth part BWP of the first cell; and
monitoring the first DCI format based on the quantity of information bits of the first DCI format.

2.　The method according to claim 1, wherein

the first DCI format can be used to simultaneously schedule downlink data transmission of two or more cells;
the first DCI format can be used to simultaneously schedule uplink data transmission of two or more cells; or
the first DCI format can be used to simultaneously schedule data transmission of two or more cells, and the data transmission is uplink data transmission or downlink data transmission.

3.　The method according to claim 1 or 2, wherein the first BWP is one of the following:

a last non-dormant active uplink BWP used before the first cell is in a current inactive mode or dormancy mode;
a last non-dormant active downlink BWP used before the first cell is in the current inactive mode or dormancy mode;
a 1st active uplink BWP that is configured for the first cell and that is used when the first cell is switched from the inactive mode to an active mode;
a 1st active downlink BWP that is configured for the first cell and that is used when the first cell is switched from the inactive mode to the active mode;
a 1st corresponding non-dormant BWP of the first cell within active time;
a 1st corresponding non-dormant BWP of the first cell outside active time;
an uplink BWP whose identifier ID is the same as an identifier of the 1st corresponding non-dormant BWP of the first cell within active time;

an uplink BWP whose ID is the same as an ID of the 1st corresponding non-dormant BWP of the first cell outside active time; or

a current active uplink BWP.

4. The method according to claim 1 or 2, wherein the determining a quantity of information bits of the first DCI format based on a first BWP of the first cell comprises:

determining the quantity of information bits of the first DCI format based on the first BWP and a third BWP of the first cell, wherein

the first BWP is one of the following:

a last non-dormant active downlink BWP used before the first cell is in a current inactive mode or dormancy mode;

a 1st active downlink BWP that is configured for the first cell and that is used when the first cell is switched from the inactive mode to an active mode;

a 1st corresponding non-dormant BWP of the first cell within active time; or

a 1st corresponding non-dormant BWP of the first cell outside active time; and

the third BWP is one of the following:

a last non-dormant active uplink BWP used before the first cell is in the current inactive mode or dormancy mode;

a 1st active uplink BWP that is configured for the first cell and that is used when the first cell is switched from the inactive mode to the active mode;

an uplink BWP whose identifier ID is the same as an identifier of the 1st corresponding non-dormant BWP of the first cell within active time;

an uplink BWP whose ID is the same as an ID of the 1st corresponding non-dormant BWP of the first cell outside active time; or

a current active uplink BWP.

5. The method according to claim 4, wherein the first cell is in the inactive mode; and

the first BWP is the last non-dormant active downlink BWP used before the first cell is in the current inactive mode, and the third BWP is the last non-dormant active uplink BWP used before the first cell is in the current inactive mode;

when the 1st active downlink BWP that is configured for the first cell and that is used when the first cell is switched from the inactive mode to the active mode is a non-dormant BWP, the first BWP is the 1st active downlink BWP that is configured for the first cell and that is used when the first cell is switched from the inactive mode to the active mode, and the third BWP is the 1st active uplink BWP that is configured for the first cell and that is used when the first cell is switched from the inactive mode to the active mode;

when the 1st active downlink BWP that is configured for the first cell and that is used when the first cell is switched from the inactive mode to the active mode is a dormant BWP, and the 1st corresponding non-dormant BWP within active time is preconfigured for the first cell, the first BWP is the 1st corresponding non-dormant BWP within active time, and the third BWP is the 1st active uplink BWP that is configured for the first cell and that is used when the first cell is switched from the inactive mode to the active mode;

when the 1st active downlink BWP that is configured for the first cell and that is used when the first cell is switched from the inactive mode to the active mode is a dormant BWP, and the 1st corresponding non-dormant BWP within active time is not preconfigured for the first cell, the first BWP is the 1st corresponding non-dormant BWP outside active time, and the third BWP is the 1st active uplink BWP that is configured for the first cell and that is used when the first cell is switched from the inactive mode to the active mode;

when the 1st active downlink BWP that is configured for the first cell and that is used when the first cell is switched from the inactive mode to the active mode is a dormant BWP, and the 1st corresponding non-dormant BWP within active time is preconfigured for the first cell, the first BWP is the 1st corresponding non-dormant BWP within active time, and the third BWP is the uplink BWP whose ID is the same as the ID of the 1st corresponding non-dormant BWP of the first cell within active time; or

when the 1st active downlink BWP that is configured for the first cell and that is used when the first cell is switched from the inactive mode to the active mode is a dormant BWP, and the 1st corresponding non-dormant BWP within active time is not preconfigured for the first cell, the first BWP is the 1st corresponding non-dormant BWP outside active time, and the third BWP is the uplink BWP whose ID is the same as the ID of the 1st corresponding non-

dormant BWP of the first cell outside active time.

6. The method according to claim 4, wherein when the first cell is in the dormancy mode,

the first BWP is the last non-dormant active downlink BWP used before the first cell is in the current dormancy mode, and the third BWP is the last non-dormant active uplink BWP used before the first cell is in the current dormancy mode;
when the 1st corresponding non-dormant BWP within active time is preconfigured for the first cell, the first BWP is the 1st corresponding non-dormant BWP within active time, and the third BWP is the current active uplink BWP;
when the 1st corresponding non-dormant BWP within active time is not preconfigured for the first cell, the first BWP is the 1st corresponding non-dormant BWP outside active time, and the third BWP is the current active uplink BWP;
when the 1st corresponding non-dormant BWP within active time is preconfigured for the first cell, the first BWP is the 1st corresponding non-dormant BWP within active time, and the third BWP is the uplink BWP whose ID is the same as the ID of the 1st corresponding non-dormant BWP of the first cell within active time;
when the 1st corresponding non-dormant BWP within active time is not preconfigured for the first cell, the first BWP is the 1st corresponding non-dormant BWP outside active time, and the third BWP is the uplink BWP whose ID is the same as the ID of the 1st corresponding non-dormant BWP of the first cell outside active time;
when a dormancy indication indicating that the first cell enters the current dormancy mode is received within active time, the first BWP is the 1st corresponding non-dormant BWP within active time, and the third BWP is the current active uplink BWP;
when a dormancy indication indicating that the first cell enters the current dormancy mode is received outside active time, the first BWP is the 1st corresponding non-dormant BWP outside active time, and the third BWP is the current active uplink BWP;
when a dormancy indication indicating that the first cell enters the current dormancy mode is received within active time, the first BWP is the 1st corresponding non-dormant BWP within active time, and the third BWP is the uplink BWP whose ID is the same as the ID of the 1st corresponding non-dormant BWP of the first cell within active time; or
when a dormancy indication indicating that the first cell enters the current dormancy mode is received outside active time, the first BWP is the 1st corresponding non-dormant BWP outside active time, and the third BWP is the uplink BWP whose ID is the same as the ID of the 1st corresponding non-dormant BWP of the first cell outside active time.

7. The method according to any one of claims 1 to 6, wherein before the determining a quantity of information bits of the first DCI format, the method further comprises:
determining a first BWP ID, wherein the first BWP ID is an ID of the first BWP.

8. The method according to claim 7, wherein the determining the first BWP ID comprises:
determining that the first BWP ID is a first preset value.

9. The method according to claim 7, wherein the determining the first BWP ID comprises:
determining that a bit width of a BWP indicator field of the first cell in the first DCI format is M bits, and determining that the first BWP ID is a largest value corresponding to the M bits, wherein M is a positive integer.

10. The method according to claim 7, wherein when the first cell is in the inactive mode, the determining the first BWP ID comprises:

determining that the first BWP ID is an ID of a 1st active BWP used when the first cell is switched from the inactive mode to the active mode; or
determining that the first BWP ID is an ID of an active BWP used before the first cell is switched from the active mode to the current inactive mode.

11. The method according to claim 7, wherein when the first cell is in the inactive mode, the determining the first BWP ID comprises:

when a dedicated inactive BWP ID is preconfigured for the first cell, determining that the first BWP ID is the dedicated inactive BWP ID; or
when a dormant BWP ID is preconfigured for the first cell, and a dedicated inactive BWP ID is not preconfigured for the first cell, the first BWP ID is the dormant BWP ID.

12. The method according to claim 7, wherein when the first cell is in the dormancy mode, the determining the first BWP ID comprises:

when a 1st corresponding non-dormant BWP ID within active time is preconfigured for the first cell, determining that the first BWP ID is the 1st corresponding non-dormant BWP ID within active time; or
when a 1st corresponding non-dormant BWP ID outside active time is preconfigured for the first cell, and a 1st corresponding non-dormant BWP ID within active time is not preconfigured for the first cell, determining that the first BWP ID is the 1st corresponding non-dormant BWP ID outside active time.

13. The method according to claim 7, wherein when the first cell is in the dormancy mode, the determining the first BWP ID comprises:

receiving a second DCI format;
switching an active downlink BWP of the first cell to a dormant BWP based on the second DCI format; and
when the second DCI format is received within active time, determining that the first BWP ID is a 1st corresponding non-dormant BWP ID within active time; or
when the second DCI format is received outside active time, determining that the first BWP ID is a 1st corresponding non-dormant BWP ID outside active time.

14. The method according to claim 7, wherein the determining the first BWP ID comprises:
when a dormant BWP ID is preconfigured for the first cell, determining that the first BWP ID is the dormant BWP ID.

15. A downlink control information transmission method, comprising:

sending first cross carrier scheduling configuration information, wherein the first cross carrier scheduling configuration information indicates a terminal device to monitor a first downlink control information DCI format, and the first DCI format can be used to schedule data transmission of two or more cells;
when a first cell is in an inactive mode or a dormancy mode, determining a quantity of information bits of the first DCI format based on a first bandwidth part BWP of the first cell; and
sending the first DCI format based on the quantity of information bits of the first DCI format.

16. The method according to claim 15, wherein

the first DCI format can be used to simultaneously schedule downlink data transmission of two or more cells;
the first DCI format can be used to simultaneously schedule uplink data transmission of two or more cells; or
the first DCI format can be used to simultaneously schedule data transmission of two or more cells, and the data transmission is uplink data transmission or downlink data transmission.

17. The method according to claim 15 or 16, wherein the first BWP is one of the following:

a last non-dormant active uplink BWP used before the first cell is in a current inactive mode or dormancy mode;
a last non-dormant active downlink BWP used before the first cell is in the current inactive mode or dormancy mode;
a 1st active uplink BWP that is configured for the first cell and that is used when the first cell is switched from the inactive mode to an active mode;
a 1st active downlink BWP that is configured for the first cell and that is used when the first cell is switched from the inactive mode to the active mode;
a 1st corresponding non-dormant BWP of the first cell within active time; or
a 1st corresponding non-dormant BWP of the first cell outside active time; and
an uplink BWP whose identifier ID is the same as an identifier of the 1st corresponding non-dormant BWP of the first cell within active time;
an uplink BWP whose ID is the same as an ID of the 1st corresponding non-dormant BWP of the first cell outside active time; or
a current active uplink BWP.

18. The method according to claim 15 or 16, wherein the determining a quantity of information bits of the first DCI format based on a first BWP of the first cell comprises:

determining the quantity of information bits of the first DCI format based on the first BWP and a third BWP of the first cell, wherein
the first BWP is one of the following:

a last non-dormant active downlink BWP used before the first cell is in a current inactive mode or dormancy mode;
a 1st active downlink BWP that is configured for the first cell and that is used when the first cell is switched from the inactive mode to an active mode;
a 1st corresponding non-dormant BWP of the first cell within active time; or
a 1st corresponding non-dormant BWP of the first cell outside active time; and
the third BWP is one of the following:

a last non-dormant active uplink BWP used before the first cell is in the inactive mode or the dormancy mode;
a 1st active uplink BWP that is configured for the first cell and that is used when the first cell is switched from the inactive mode to the active mode;
an uplink BWP whose identifier ID is the same as an identifier of the 1st corresponding non-dormant BWP of the first cell within active time;
an uplink BWP whose ID is the same as an ID of the 1st corresponding non-dormant BWP of the first cell outside active time; or
a current active uplink BWP.

19. The method according to claim 18, wherein the first cell is in the inactive mode; and

the first BWP is the last non-dormant active downlink BWP used before the first cell is in the current inactive mode, and the third BWP is the last non-dormant active uplink BWP used before the first cell is in the current inactive mode;
when the 1st active downlink BWP that is configured for the first cell and that is used when the first cell is switched from the inactive mode to the active mode is a non-dormant BWP, the first BWP is the 1st active downlink BWP that is configured for the first cell and that is used when the first cell is switched from the inactive mode to the active mode, and the third BWP is the 1st active uplink BWP that is configured for the first cell and that is used when the first cell is switched from the inactive mode to the active mode;
when the 1st active downlink BWP that is configured for the first cell and that is used when the first cell is switched from the inactive mode to the active mode is a dormant BWP, and the 1st corresponding non-dormant BWP within active time is preconfigured for the first cell, the first BWP is the 1st corresponding non-dormant BWP within active time, and the third BWP is the 1st active uplink BWP that is configured for the first cell and that is used when the first cell is switched from the inactive mode to the active mode;
when the 1st active downlink BWP that is configured for the first cell and that is used when the first cell is switched from the inactive mode to the active mode is a dormant BWP, and the 1st corresponding non-dormant BWP within active time is not preconfigured for the first cell, the first BWP is the 1st corresponding non-dormant BWP outside active time, and the third BWP is the 1st active uplink BWP that is configured for the first cell and that is used when the first cell is switched from the inactive mode to the active mode;
when the 1st active downlink BWP that is configured for the first cell and that is used when the first cell is switched from the inactive mode to the active mode is a dormant BWP, and the 1st corresponding non-dormant BWP within active time is preconfigured for the first cell, the first BWP is the 1st corresponding non-dormant BWP within active time, and the third BWP is the uplink BWP whose ID is the same as the ID of the 1st corresponding non-dormant BWP of the first cell within active time; or
when the 1st active downlink BWP that is configured for the first cell and that is used when the first cell is switched from the inactive mode to the active mode is a dormant BWP, and the 1st corresponding non-dormant BWP within active time is not preconfigured for the first cell, the first BWP is the 1st corresponding non-dormant BWP outside active time, and the third BWP is the uplink BWP whose ID is the same as the ID of the 1st corresponding non-dormant BWP of the first cell outside active time.

20. The method according to claim 18, wherein when the first cell is in the dormancy mode,

the first BWP is the last non-dormant active downlink BWP used before the first cell is in the current dormancy mode, and the third BWP is the last non-dormant active uplink BWP used before the first cell is in the current dormancy mode;

when the 1st corresponding non-dormant BWP within active time is preconfigured for the first cell, the first BWP is the 1st corresponding non-dormant BWP within active time, and the third BWP is the current active uplink BWP;

when the 1st corresponding non-dormant BWP within active time is not preconfigured for the first cell, the first BWP is the 1st corresponding non-dormant BWP outside active time, and the third BWP is the current active uplink BWP;

when the 1st corresponding non-dormant BWP within active time is preconfigured for the first cell, the first BWP is the 1st corresponding non-dormant BWP within active time, and the third BWP is the uplink BWP whose ID is the same as the ID of the 1st corresponding non-dormant BWP of the first cell within active time;

when the 1st corresponding non-dormant BWP within active time is not preconfigured for the first cell, the first BWP is the 1st corresponding non-dormant BWP outside active time, and the third BWP is the uplink BWP whose ID is the same as the ID of the 1st corresponding non-dormant BWP of the first cell outside active time;

when a dormancy indication indicating that the first cell enters the current dormancy mode is received within active time, the first BWP is the 1st corresponding non-dormant BWP within active time, and the third BWP is the current active uplink BWP;

when a dormancy indication indicating that the first cell enters the current dormancy mode is received outside active time, the first BWP is the 1st corresponding non-dormant BWP outside active time, and the third BWP is the current active uplink BWP;

when a dormancy indication indicating that the first cell enters the current dormancy mode is received within active time, the first BWP is the 1st corresponding non-dormant BWP within active time, and the third BWP is the uplink BWP whose ID is the same as the ID of the 1st corresponding non-dormant BWP of the first cell within active time; or

when a dormancy indication indicating that the first cell enters the current dormancy mode is received outside active time, the first BWP is the 1st corresponding non-dormant BWP outside active time, and the third BWP is the uplink BWP whose ID is the same as the ID of the 1st corresponding non-dormant BWP of the first cell outside active time.

21. The method according to any one of claims 15 to 20, wherein before the determining a quantity of information bits of the first DCI format, the method further comprises:
determining the first BWP ID, wherein the first BWP ID is an ID of the first BWP.

22. The method according to claim 21, wherein the determining the first BWP ID comprises:
determining that the first BWP ID is a first preset value.

23. The method according to claim 21, wherein the determining the first BWP ID comprises:
determining that a bit width of a BWP indicator field of the first cell in the first DCI format is M bits, and determining that the first BWP ID is a largest value corresponding to the M bits, wherein M is a positive integer.

24. The method according to claim 21, wherein when the first cell is in the inactive mode, the determining the first BWP ID comprises:

determining that the first BWP ID is an ID of a 1st active BWP used when the first cell is switched from the inactive mode to the active mode; or
determining that the first BWP ID is an ID of an active BWP used before the first cell is switched from the active mode to the current inactive mode.

25. The method according to claim 21, wherein when the first cell is in the inactive mode, the determining the first BWP ID comprises:

when a dedicated inactive BWP ID is preconfigured for the first cell, determining that the first BWP ID is the dedicated inactive BWP ID; or
when a dormant BWP ID is preconfigured for the first cell, and a dedicated inactive BWP ID is not preconfigured for the first cell, the first BWP ID is the dormant BWP ID.

26. The method according to claim 21, wherein when the first cell is in the dormancy mode, the determining the first BWP ID comprises:

when the 1st corresponding non-dormant BWP within active time is preconfigured for the first cell, determining that the first BWP is the 1st corresponding non-dormant BWP within active time; or
when the 1st corresponding non-dormant BWP outside active time is preconfigured for the first cell, and the 1st corresponding non-dormant BWP within active time is not preconfigured for the first cell, determining that the first BWP is the 1st corresponding non-dormant BWP outside active time.

27. The method according to claim 21, wherein when the first cell is in the dormancy mode, the determining the first BWP ID comprises:

sending a second DCI format, wherein the second DCI format indicates the terminal device to switch an active downlink BWP of the first cell to a dormant BWP; and
when the second DCI format is sent within active time, determining that the first BWP ID is a 1st corresponding non-dormant BWP ID within active time; or
when the second DCI format is sent outside active time, determining that the first BWP ID is a 1st corresponding non-dormant BWP ID outside active time.

28. The method according to claim 21, wherein the determining the first BWP ID comprises:
when a dormant BWP ID is preconfigured for the first cell, determining that the first BWP ID is the dormant BWP ID.

29. A communication apparatus, comprising:

a memory, configured to store computer instructions; and
a processor, configured to execute the computer instructions stored in the memory, to enable the communication apparatus to perform the method according to any one of claims 1 to 14, or
to enable the communication apparatus to perform the method according to any one of claims 15 to 28.

30. A computer-readable storage medium, storing a computer program, wherein when the computer program is executed by a communication apparatus, the method according to any one of claims 1 to 28 is performed.

Communication system 100

FIG. 1

200

FIG. 2

300

One frame

One
subframe

UE monitors
a PDCCH

Active time          Non-active time

Start offset

DRX cycle

Slot offset

FIG. 3

400

| Network device | | | Terminal device |

S410: Receive first cross carrier scheduling information, where the first cross carrier scheduling information indicates the terminal device to monitor a first downlink control information DCI format

S420: When a first cell is in an inactive mode or a dormancy mode, determine a quantity of information bits of the first DCI format based on a first BWP of the first cell

S430: Monitor the first DCI format based on the quantity of information bits of the first DCI format

FIG. 4

500

| Network device | Terminal device |
|---|---|

**Manner A**

S501: Determine that a first BWP ID of a first cell is a real BWP ID

S502: Determine that the first BWP ID of the first cell is the real BWP ID

S503: Determine a quantity of information bits of a first DCI format based on the first BWP ID

S504: Determine the quantity of information bits of the first DCI format based on the first BWP ID

S505: Determine a dedicated indicator field of the first cell in the first DCI format based on the first BWP ID

S506: Determine the dedicated indicator field of the first cell in the first DCI format based on the first BWP ID

**Manner B**

S507: Determine that a first BWP ID of a first cell is a virtual BWP ID

S508: Determine that the first BWP ID of the first cell is the virtual BWP ID

S509: Determine a quantity of information bits of a first DCI format based on a second preset BWP ID

S510: Determine the quantity of information bits of the first DCI format based on the second preset BWP ID

S511: Determine a dedicated indicator field of the first cell in the first DCI format based on the second preset BWP ID

S512: Determine the dedicated indicator field of the first cell in the first DCI format based on the second preset BWP ID

**Manner C**

S513: Not set a dedicated indicator field of a first cell in a first DCI format

S514: Not set the dedicated indicator field of the first cell in the first DCI format

FIG. 5

600

| Network device | | Terminal device | |
|---|---|---|---|
| S601: Determine that a first BWP ID of a first cell is a first preset value | | S602: Determine that the first BWP ID of the first cell is the first preset value | Manner 1 |
| S603: Determine that a bit width of a BWP indicator field of a first cell in first DCI is M bits, and determine that a first BWP ID is a largest value corresponding to the M bits | | S604: Determine that the bit width of the BWP indicator field of the first cell in the first DCI is the M bits, and determine that the first BWP ID is the largest value corresponding to the M bits | Manner 2 |
| S605: Determine that a first BWP ID of a first cell is a dormant BWP ID | | S606: Determine that the first BWP ID of the first cell is the dormant BWP ID | Manner 3 |
| S607: Determine that a first BWP ID is a $1^{st}$ active BWP ID used when a first cell is switched from an inactive mode to an active mode | | S608: Determine that the first BWP ID is the $1^{st}$ active BWP ID used when the first cell is switched from the inactive mode to the active mode | Manner 4 |
| S609: Determine that a first BWP ID is a $1^{st}$ active BWP ID used when a first cell is switched from an active mode to a current inactive mode | | S610: Determine that the first BWP ID is the $1^{st}$ active BWP ID used when the first cell is switched from the active mode to the current inactive mode | Manner 5 |
| S611: Determine that a first BWP ID is a dedicated inactive BWP ID | | S612: Determine that the first BWP ID is the dedicated inactive BWP ID | Manner 6 |
| S613: Determine that a dormant BWP ID is preconfigured for a first cell, and a dedicated inactive BWP ID is not configured for the first cell, and determine that a first BWP ID is the dormant BWP ID | | S614: Determine that the dormant BWP ID is preconfigured for the first cell, and the dedicated inactive BWP ID is not configured for the first cell, and determine that the first BWP ID is the dormant BWP ID | Manner 7 |
| S615: Determine that a first BWP ID is a $1^{st}$ corresponding non-dormant BWP ID within active time | | S616: Determine that the first BWP ID is the $1^{st}$ corresponding non-dormant BWP ID within active time | Manner 8 |
| S617: Determine that a first BWP ID is a $1^{st}$ corresponding non-dormant BWP ID outside active time | | S618: Determine that the first BWP ID is the $1^{st}$ corresponding non-dormant BWP ID outside active time | Manner 9 |
| | S619: Receive a second DCI format, where the second DCI format indicates the terminal device to switch an active downlink BWP of the first cell to a dormant BWP | | |
| S620: Determine that a first BWP ID is a $1^{st}$ corresponding non-dormant BWP ID within active time | | S621: Determine that the first BWP ID is the $1^{st}$ corresponding non-dormant BWP ID within active time | Manner 10 |
| S622: Determine that a first BWP ID is a $1^{st}$ corresponding non-dormant BWP ID outside active time | | S623: Determine that the first BWP ID is the $1^{st}$ corresponding non-dormant BWP ID within active time | Manner 11 |

FIG. 6

700

| Network device | | Terminal device |

S710: Receive first cross carrier scheduling configuration information, where the first cross carrier scheduling configuration information indicates the terminal device to monitor a first downlink control information DCI format →

S720: Receive second cross carrier scheduling configuration information, where the second cross carrier scheduling configuration information includes a first preset BWP ID →

S730: Monitor the first DCI format based on a quantity of information bits of the first DCI format, where the first DCI format includes a first BWP ID of a first cell →

S740: Determine that the first cell is in an inactive mode or a dormancy mode

S750: When the first preset BWP ID is not the first BWP ID, determine that the first DCI format is a false alarm DCI format

Manner a

S760: Determine that the first cell is in an active mode and a non-dormancy mode

S770: When the first preset BWP ID corresponds to a virtual BWP ID, determine that no scheduling is present in the first cell

Manner b

FIG. 7

800

| Network device | | | Terminal device |

S810: Receive first cross carrier scheduling information, where the first cross carrier scheduling information indicates the terminal device to monitor a first downlink control information DCI format →

S820: When a status of a first cell changes, keep a quantity of information bits of the first DCI format unchanged

S830: Monitor the first DCI format based on the quantity of information bits of the first DCI format →

FIG. 8

Communication apparatus 900

Processing unit 910

Transceiver unit 920

FIG. 9

Communication apparatus 1000

Processor 1010

Interface circuit 1020

Memory 1030

FIG. 10

## INTERNATIONAL SEARCH REPORT

| International application No. |
|---|
| **PCT/CN2023/120050** |

### A. CLASSIFICATION OF SUBJECT MATTER

H04W 72/1273(2023.01)i

According to International Patent Classification (IPC) or to both national classification and IPC

### B. FIELDS SEARCHED

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNTXT, VCN, ENTXT, DWPI, CNKI, 3GPP: 跨载波调度, 载波指示, 去激活态, 休眠态, 监测, DCI格式, BWP, cross w carrier w scheduling, CCS, CIF, inactive, dormancy, dormant, monitor

### C. DOCUMENTS CONSIDERED TO BE RELEVANT

| Category* | Citation of document, with indication, where appropriate, of the relevant passages | Relevant to claim No. |
|---|---|---|
| A | CN 109644487 A (LG ELECTRONICS INC.) 16 April 2019 (2019-04-16) description, paragraphs [0180]-[0194] | 1-30 |
| A | CN 113473634 A (INTEL CORP.) 01 October 2021 (2021-10-01) entire document | 1-30 |
| A | CN 114070516 A (BEIJING UNISOC COMMUNICATION TECHNOLOGY CO., LTD.) 18 February 2022 (2022-02-18) entire document | 1-30 |
| A | WO 2022151418 A1 (HUAWEI TECHNOLOGIES CO., LTD.) 21 July 2022 (2022-07-21) entire document | 1-30 |
| A | AT&T. "Summary of UE features for DSS R1-2111812" *3GPP TSG RAN WG1 #107-e,* 19 November 2021 (2021-11-19), entire document | 1-30 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 November 2023** | **20 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/120050**

| Patent document cited in search report | | | Publication date (day/month/year) | Patent family member(s) | | | Publication date (day/month/year) |
|---|---|---|---|---|---|---|---|
| CN | 109644487 | A | 16 April 2019 | EP | 3509378 | A1 | 10 July 2019 |
| | | | | US | 2022239402 | A1 | 28 July 2022 |
| | | | | KR | 20190026921 | A | 13 March 2019 |
| | | | | US | 2021282165 | A1 | 09 September 2021 |
| | | | | JP | 2019534596 | A | 28 November 2019 |
| | | | | JP | 2019535162 | A | 05 December 2019 |
| | | | | EP | 3509379 | A1 | 10 July 2019 |
| | | | | KR | 20190026922 | A | 13 March 2019 |
| | | | | WO | 2018044079 | A1 | 08 March 2018 |
| | | | | WO | 2018044080 | A1 | 08 March 2018 |
| | | | | US | 2019190643 | A1 | 20 June 2019 |
| CN | 113473634 | A | 01 October 2021 | None | | | |
| CN | 114070516 | A | 18 February 2022 | WO | 2022028202 | A1 | 10 February 2022 |
| WO | 2022151418 | A1 | 21 July 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211231949
- CN 202211362876